# EUROPEAN PATENT APPLICATION

(11) **EP 3 104 311 A1**
(43) Date of publication of application: **14.12.2016**
(21) Application number: 16150515.1
(22) Date of filing: 08.01.2016
(51) Int. Cl.: G06Q 10/00

(54) **MOBILE TERMINAL AND CONTROL METHOD THEREOF**

(30) Priority: 09.06.2015 KR 20150081419
(71) Applicant: LG Electronics Inc., Seoul 07336 (KR)
(72) Inventor: CHO, Taehoon, 06772 SEOUL (KR); SEOL, Jie, 06772 SEOUL (KR)
(74) Representative: Cabinet Plasseraud

(57) **Abstract**

A mobile terminal of performing a payment function and a control method thereof are provided. The mobile terminal comprises: a display unit; a wireless communication unit to perform communication with an external terminal; and a controller to transmit payment request information relating to a specific product to the external terminal through the wireless communication unit, receive at least one of payment approval information and payment card information for approving payment for the specific product after transmitting the payment request information, and perform the payment for the specific product on the basis of the received at least one of the payment approval information and the payment card information, wherein the controller outputs the at least one of the payment approval information and the payment card information on the display unit upon the reception thereof, and wherein the controller controls the at least one of the payment approval information and the payment card information to disappear from the display unit, such that the payment is not performed any more, when the payment for the specific product is performed based on the at least one of the payment approval information and the payment card information.

## Description

### BACKGROUND OF THE DISCLOSURE

### 1. Field of the Disclosure

This specification relates to a mobile terminal capable of executing a payment function, and a control method thereof.

### 2. Background of the Disclosure

Terminals may be generally classified as mobile/portable terminals or stationary terminals according to their mobility. Mobile terminals may also be classified as handheld terminals or vehicle mounted terminals according to whether or not a user can directly carry the terminal.

Mobile terminals have become increasingly more functional. Examples of such functions include data and voice communications, capturing images and video via a camera, recording audio, playing music files via a speaker system, and displaying images and video on a display. Some mobile terminals include additional functionality which supports game playing, while other terminals are configured as multimedia players. More recently, mobile terminals have been configured to receive broadcast and multicast signals which permit viewing of content such as videos and television programs.

As it becomes multifunctional, a mobile terminal can be allowed to capture still images or moving images, play music or video files, play games, receive broadcast and the like, so as to be implemented as an integrated multimedia player.

Efforts are ongoing to support and increase the functionality of mobile terminals. Such efforts include software and hardware improvements, as well as changes and improvements in the structural components.

In recent time, functions of performing payment for products or items through a mobile terminal have been introduced. This trend brings about a need for developing functions which can meet various user requirements for such product payment.

### SUMMARY OF THE DISCLOSURE

Therefore, an aspect of the detailed description is to provide a method of performing representation payment through an external terminal.

Another aspect of the detailed description is to provide various functions associated with payment upon performing representation payment through an external terminal.

To achieve these and other advantages and in accordance with the purpose of this specification, as embodied and broadly described herein, there is provided a mobile terminal including a display unit, a wireless communication unit configured to perform communication with an external terminal, and a controller that is configured to transmit payment request information relating to a specific product to the external terminal through the wireless communication unit, receive at least one of payment approval information and payment card information for approving payment for the specific product after transmitting the payment request information, and perform the payment for the specific product on the basis of the received at least one of the payment approval information and the payment card information, wherein the controller outputs the at least one of the payment approval information and the payment card information on the display unit upon the reception thereof, and wherein the controller controls the at least one of the payment approval information and the payment card information to disappear from the display unit, such that the payment is not performed any more, when the payment for the specific product is performed based on the at least one of the payment approval information and the payment card information.

In one embodiment disclosed herein, the controller may delete the payment approval information to restrict the payment based on the at least one of the payment approval information and the payment card information, when the payment for the specific product is performed based on the at least one of the payment approval information and the payment card information.

In one embodiment disclosed herein, the mobile terminal may further include a short-range communication unit that is configured to perform communication with an external object located at a close distance. The controller may transmit at least one of the payment approval information and the payment card information to the external object through the short-range communication unit to perform the payment for the specific product.

In one embodiment disclosed herein, the payment approval information may include at least one of information related to at least one product, location information and time information.

In one embodiment disclosed herein, the controller may output information related to the specific product on the display unit after the transmission of the payment request information.

In one embodiment disclosed herein, the controller may change visual appearance of information related to the specific product to notify on the display unit that the specific product has been deleted, when notification information notifying that the specific product has been deleted is received from the external terminal.

In one embodiment disclosed herein, the controller may output information related to another product, which is different from the specific object, on the display unit when payment approval information related to the another product is received from the external terminal.

In one embodiment disclosed herein, the mobile terminal may further include a first payment module that is configured to perform payment by a first payment method, and a second payment module that is configured to perform payment by a second payment method. The controller may decide an output position of notification information, which notifies the at least one of the payment approval information and the payment card information, based on a payment method included in the at least one of the payment approval information and the payment card information.

In one embodiment disclosed herein, the controller may further be configured to notify whether or not the payment has been approved to the external terminal, after performing the payment based on the at least one of the payment approval information and the payment card information.

In one embodiment disclosed herein, the mobile terminal may further include a camera. The controller may control the camera to capture an image for the specific product, in response to a user request, and generate the payment request information using the captured image.

In one embodiment disclosed herein, the display unit may output the image captured by the camera. The controller may output a preview image received through the camera, instead of the image corresponding to the specific product, on the display unit, such that another product different from the specific product is captured, when a preset touch is applied to the image corresponding to the specific product while the image corresponding to the specific product is output on the display unit after capturing the image for the specific product.

In accordance with one embodiment disclosed herein, a mobile terminal may include a wireless communication unit that is configured to perform communication with an external terminal, and a controller that is configured to receive payment request information relating to a specific product from the external terminal through the wireless communication unit, and transmit at least one of payment approval information and payment card information related to the specific product to the external terminal, such that the payment is performed in the external terminal based on the payment request information related to the specific product, wherein the at least one of the payment approval information and the payment card information is set in a manner that the payment is not performed any more in the external terminal once the payment is performed in the external terminal.

In one embodiment disclosed herein, the controller may set the at least one of the payment approval information and the payment card information to be deleted from a memory once the payment is performed in the external terminal based on the at least one of the payment approval information and the payment card information.

In one embodiment disclosed herein, the controller may transmit payment approval information related to at least one of a plurality of products to the external terminal, in response to a user request, when payment request information related to the plurality of products is received from the external terminal.

In one embodiment disclosed herein, the mobile terminal may further include a display unit. The controller may output information related to the plurality of products on the display unit when the payment request information related to the plurality of products is received from the external terminal. The controller may delete the at least one product from the payment request information, in response to a touch is applied to information corresponding to the at least one product of the information related to the plurality of products.

In one embodiment disclosed herein, the at least one of the payment approval information and the payment card information may include fingerprint information. The controller may decide whether or not to transmit the at least one of the payment approval information and the payment card information to the external terminal, on the basis of the fingerprint information.

In one embodiment disclosed herein, the mobile terminal may further include a display unit. The controller may output screen information for setting the at least one of the payment approval information and the payment card information, in response to a preset touch applied while the payment request information related to the specific product is output on the display unit.

In one embodiment disclosed herein, the display unit may output thereon a graphic object indicating the payment card information, and the controller may set payment amount information included in the payment card information based on a size of the graphic object.

In one embodiment disclosed herein, the payment request information may include payment store information. The controller may generate the payment approval information by adding another product different from the specific product to the payment request information, based on the payment store information.

To achieve these and other advantages and in accordance with the purpose of this specification, as embodied and broadly described herein, there is provided a method for controlling a mobile terminal, the method including transmitting payment information related to at least one product to an external terminal, receiving from the external terminal at least one of payment approval information and payment card information related to one or more products of the at least one product, and performing payment for the one or more products based on the at least one of the payment approval information and the payment card information related to the one or more products, wherein the payment approval information and the payment card information are set to restrict payment after the payment for the one or more products are performed.

Further scope of applicability of the present application will become more apparent from the detailed description given hereinafter. However, it should be understood that the detailed description and specific examples, while indicating preferred embodiments of the disclosure, are given by way of illustration only, since various changes and modifications within the spirit and scope of the disclosure will become apparent to those skilled in the art from the detailed description.

### BRIEF DESCRIPTION OF THE DRAWINGS

The accompanying drawings, which are included to provide a further understanding of the disclosure and are incorporated in and constitute a part of this specification, illustrate exemplary embodiments and together with the description serve to explain the principles of the disclosure.

In the drawings:
FIG. 1A is a block diagram of a mobile terminal in accordance with one exemplary embodiment of the present invention;
FIGS. 1B and 1C are conceptual views illustrating one example of a mobile terminal, viewed from different directions;
FIGS. 2A and 2B are flowcharts illustrating a method of performing representation payment through an external terminal, in a mobile terminal in accordance with the present invention;
FIGS. 3A and 3B are conceptual views illustrating the control method of FIGS. 2A and 2B;
FIGS. 4A to 4F are conceptual views illustrating a method of executing a payment request function in a payment request terminal;
FIGS. 5A to 5C are conceptual views illustrating a method of generating payment request information in a payment request terminal;
FIGS. 6A, 6B, 7A, 7B, 8A, 8B, 9A, 9B, 10A to 10C, 11A and 11B are conceptual views illustrating a method of generating payment approval information in a payment approval terminal which has received payment request information from the payment request terminal;
FIGS. 12A to 12D are conceptual views illustrating a method of performing payment on the basis of payment approval information received from a payment approval terminal, in a payment request terminal which has transmitted payment request information;
FIG. 13 is a conceptual view illustrating a method of providing notification information related to a payment method upon performing payment in a payment request terminal;
FIGS. 14A and 14B are conceptual views illustrating a method in which a payment approval terminal pre-generates payment approval information prior to receiving payment request information.
FIGS. 15A and 15B are conceptual views illustrating a method of transmitting in real time payment request information and payment approval information, using an application associated with a message transmission function;
FIG. 16 is a conceptual view illustrating a method of notifying a payment-related event when such event related to the payment is generated; and
FIGS. 17A and 17B are conceptual views illustrating a method of performing representation payment using a social network service (SNS) application.

### DETAILED DESCRIPTION OF THE DISCLOSURE

Description will now be given in detail according to exemplary embodiments disclosed herein, with reference to the accompanying drawings. For the sake of brief description with reference to the drawings, the same or equivalent components may be provided with the same or similar reference numbers, and description thereof will not be repeated. In general, a suffix such as "module" and "unit" may be used to refer to elements or components. Use of such a suffix herein is merely intended to facilitate description of the specification, and the suffix itself is not intended to give any special meaning or function. In the present disclosure, that which is well-known to one of ordinary skill in the relevant art has generally been omitted for the sake of brevity. The accompanying drawings are used to help easily understand various technical features and it should be understood that the embodiments presented herein are not limited by the accompanying drawings. As such, the present disclosure should be construed to extend to any alterations, equivalents and substitutes in addition to those which are particularly set out in the accompanying drawings.

Mobile terminals presented herein may be implemented using a variety of different types of terminals. Examples of such terminals include cellular phones, smart phones, user equipment, laptop computers, digital broadcast terminals, personal digital assistants (PDAs), portable multimedia players (PMPs), navigators, portable computers (PCs), slate PCs, tablet PCs, ultra books, wearable devices (for example, smart watches, smart glasses, head mounted displays (HMDs)), and the like.

By way of non-limiting example only, further description will be made with reference to particular types of mobile terminals. However, such teachings apply equally to other types of terminals, such as those types noted above. In addition, these teachings may also be applied to stationary terminals such as digital TV, desktop computers, and the like.

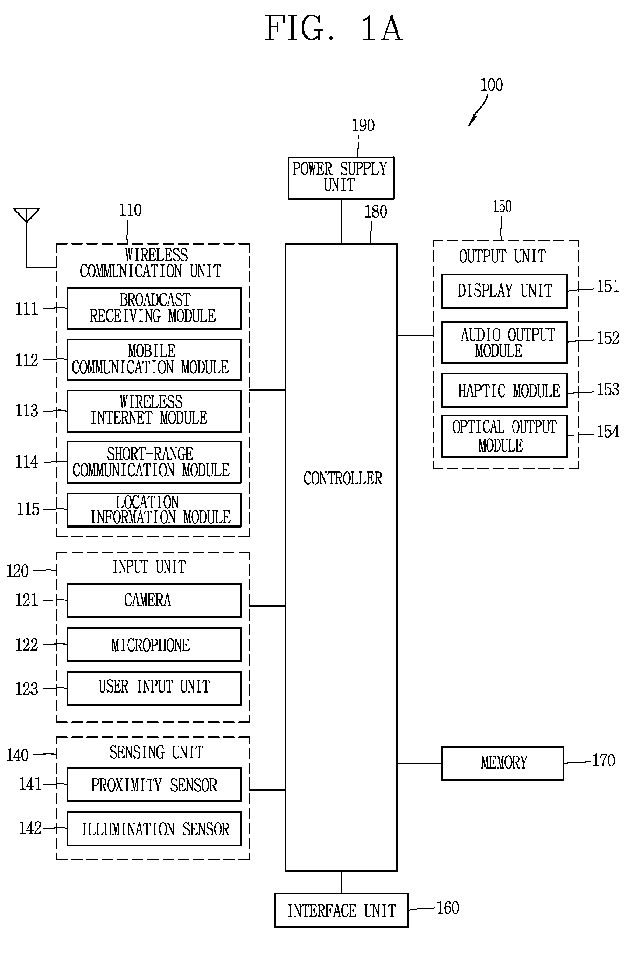

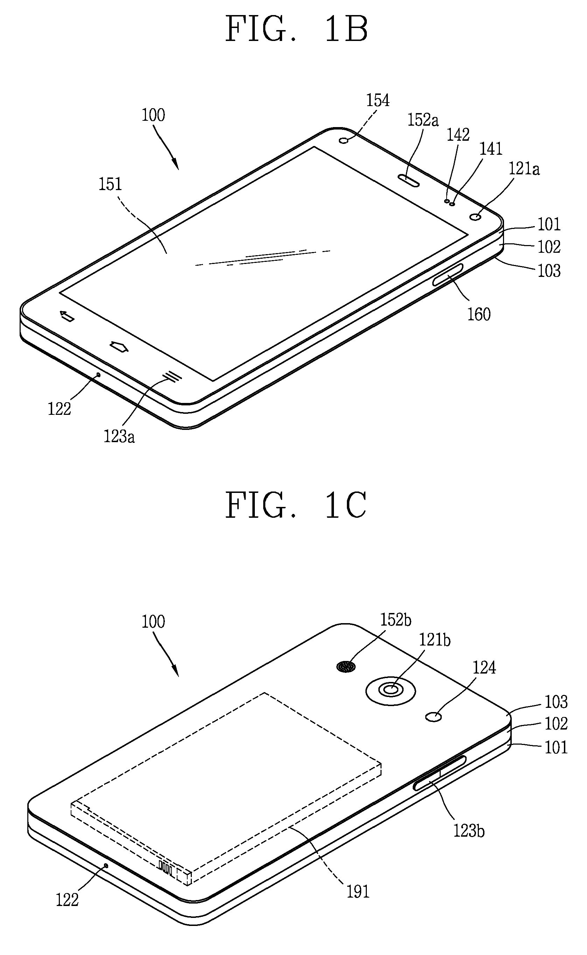

Reference is now made to FIGS. 1A-1C, where FIG. 1A is a block diagram of a mobile terminal in accordance with the present disclosure, and FIGS. 1B and 1C are conceptual views of one example of the mobile terminal, viewed from different directions.

The mobile terminal 100 is shown having components such as a wireless communication unit 110, an input unit 120, a sensing unit 140, an output unit 150, an interface unit 160, a memory 170, a controller 180, and a power supply unit 190. It is understood that implementing all of the illustrated components is not a requirement, and that greater or fewer components may alternatively be implemented.

Referring now to FIG. 1A, the mobile terminal 100 is shown having wireless communication unit 110 configured with several commonly implemented components. For instance, the wireless communication unit 110 typically includes one or more components which permit wireless communication between the mobile terminal 100 and a wireless communication system or network within which the mobile terminal is located.

The wireless communication unit 110 typically includes one or more modules which permit communications such as wireless communications between the mobile terminal 100 and a wireless communication system, communications between the mobile terminal 100 and another mobile terminal, communications between the mobile terminal 100 and an external server. Further, the wireless communication unit 110 typically includes one or more modules which connect the mobile terminal 100 to one or more networks. To facilitate such communications, the wireless communication unit 110 includes one or more of a broadcast receiving module 111, a mobile communication module 112, a wireless Internet module 113, a short-range communication module 114, and a location information module 115.

The input unit 120 includes a camera 121 for obtaining images or video, a microphone 122, which is one type of audio input device for inputting an audio signal, and a user input unit 123 (for example, a touch key, a push key, a mechanical key, a soft key, and the like) for allowing a user to input information. Data (for example, audio, video, image, and the like) is obtained by the input unit 120 and may be analyzed and processed by controller 180 according to device parameters, user commands, and combinations thereof.

The sensing unit 140 is typically implemented using one or more sensors configured to sense internal information of the mobile terminal, the surrounding environment of the mobile terminal, user information, and the like. For example, in FIG. 1A, the sensing unit 140 is shown having a proximity sensor 141 and an illumination sensor 142.

If desired, the sensing unit 140 may alternatively or additionally include other types of sensors or devices, such as a touch sensor, an acceleration sensor, a magnetic sensor, a G-sensor, a gyroscope sensor, a motion sensor, an RGB sensor, an infrared (IR) sensor, a finger scan sensor, a ultrasonic sensor, an optical sensor (for example, camera 121), a microphone 122, a battery gauge, an environment sensor (for example, a barometer, a hygrometer, a thermometer, a radiation detection sensor, a thermal sensor, and a gas sensor, among others), and a chemical sensor (for example, an electronic nose, a health care sensor, a biometric sensor, and the like), to name a few. The mobile terminal 100 may be configured to utilize information obtained from sensing unit 140, and in particular, information obtained from one or more sensors of the sensing unit 140, and combinations thereof.

The output unit 150 is typically configured to output various types of information, such as audio, video, tactile output, and the like. The output unit 150 is shown having a display unit 151, an audio output module 152, a haptic module 153, and an optical output module 154.

The display unit 151 may have an inter-layered structure or an integrated structure with a touch sensor in order to facilitate a touch screen. The touch screen may provide an output interface between the mobile terminal 100 and a user, as well as function as the user input unit 123 which provides an input interface between the mobile terminal 100 and the user.

The interface unit 160 serves as an interface with various types of external devices that can be coupled to the mobile terminal 100. The interface unit 160, for example, may include any of wired or wireless ports, external power supply ports, wired or wireless data ports, memory card ports, ports for connecting a device having an identification module, audio input/output (I/O) ports, video I/O ports, earphone ports, and the like. In some cases, the mobile terminal 100 may perform assorted control functions associated with a connected external device, in response to the external device being connected to the interface unit 160.

The memory 170 is typically implemented to store data to support various functions or features of the mobile terminal 100. For instance, the memory 170 may be configured to store application programs executed in the mobile terminal 100, data or instructions for operations of the mobile terminal 100, and the like. Some of these application programs may be downloaded from an external server via wireless communication. Other application programs may be installed within the mobile terminal 100 at time of manufacturing or shipping, which is typically the case for basic functions of the mobile terminal 100 (for example, receiving a call, placing a call, receiving a message, sending a message, and the like). It is common for application programs to be stored in the memory 170, installed in the mobile terminal 100, and executed by the controller 180 to perform an operation (or function) for the mobile terminal 100.

The controller 180 typically functions to control overall operation of the mobile terminal 100, in addition to the operations associated with the application programs. The controller 180 may provide or process information or functions appropriate for a user by processing signals, data, information and the like, which are input or output by the various components depicted in Fig. 1A, or activating application programs stored in the memory 170. As one example, the controller 180 controls some or all of the components illustrated in FIGS. 1A-1C according to the execution of an application program that have been stored in the memory 170.

The power supply unit 190 can be configured to receive external power or provide internal power in order to supply appropriate power required for operating elements and components included in the mobile terminal 100. The power supply unit 190 may include a battery, and the battery may be configured to be embedded in the terminal body, or configured to be detachable from the terminal body.

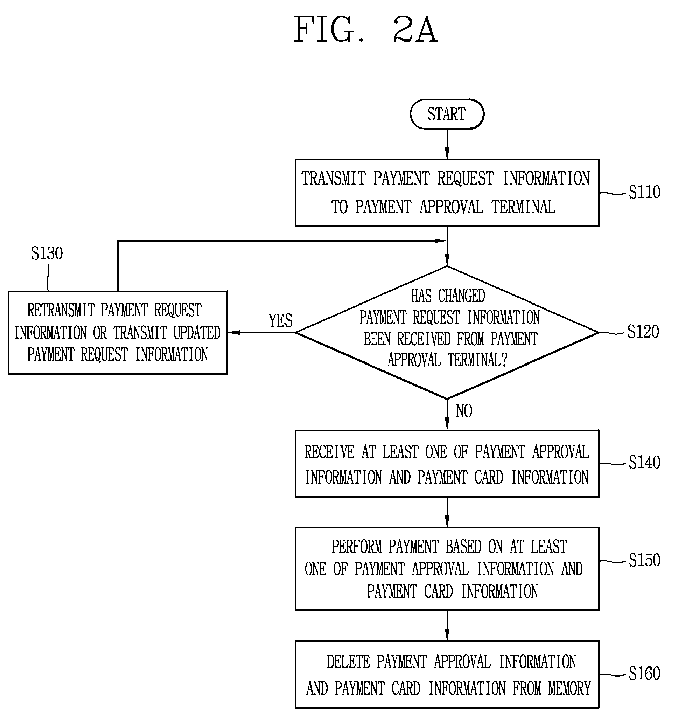

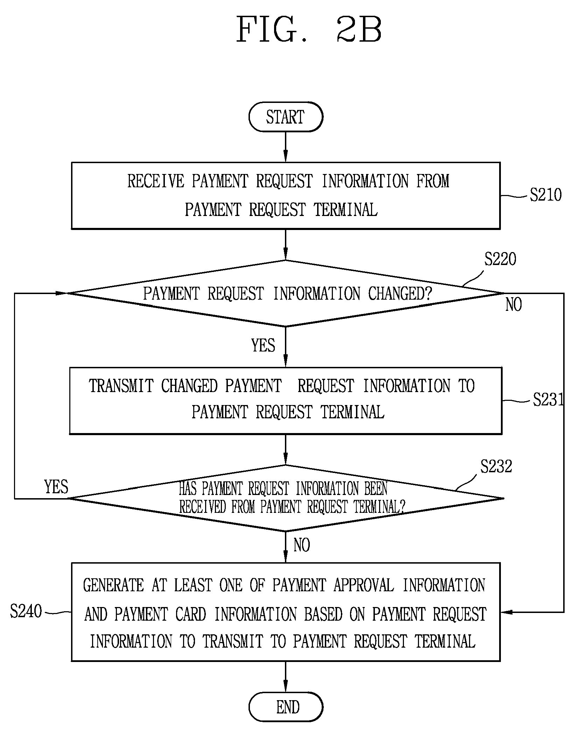

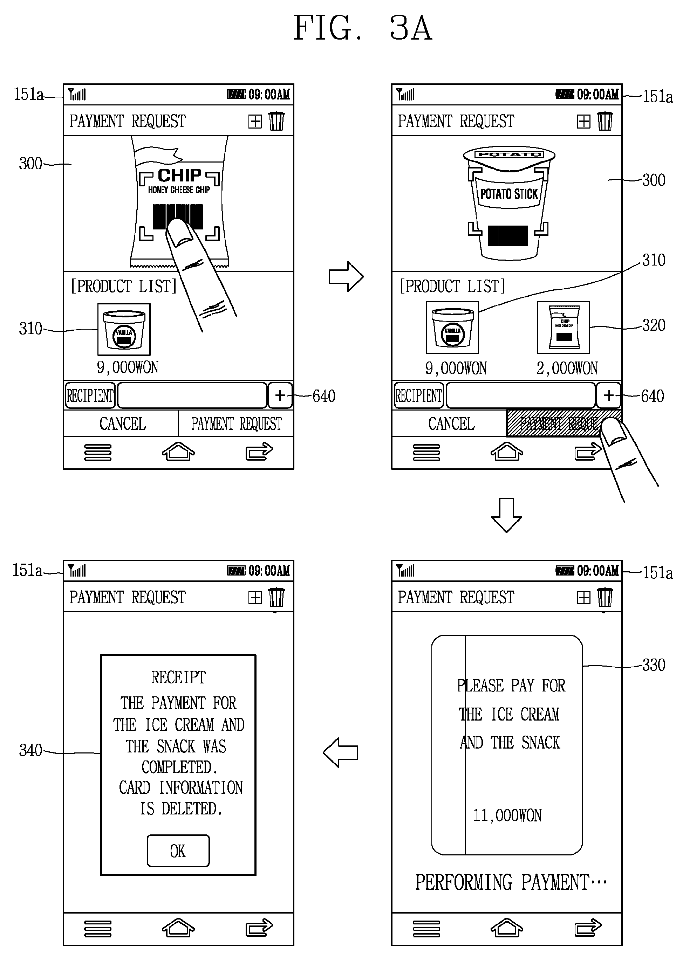

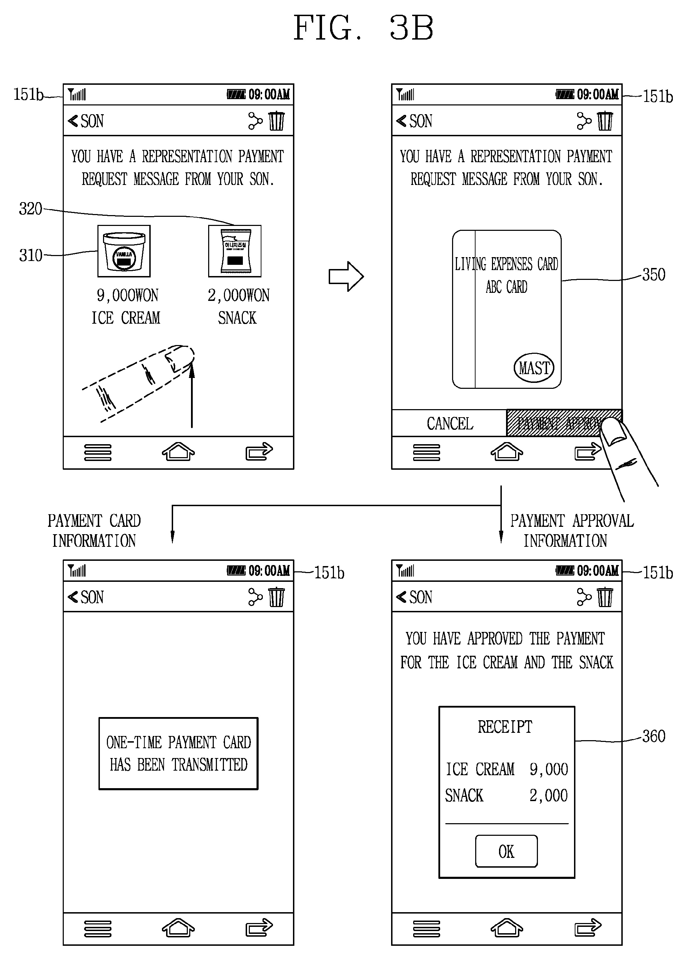

Hereinafter, a method of performing representation payment through an external terminal will be described. FIGS. 2A and 2B are flowcharts illustrating a method of performing representation payment through an external terminal in a mobile terminal in accordance with the present invention, and FIGS. 3A and 3B are conceptual views illustrating the control method of FIGS. 2A and 2B.

A mobile terminal according to the present invention may perform payment directly through a payment means, and also perform representation payment through an external terminal.

Hereinafter, a terminal that requests for payment from an external terminal is referred to as payment request terminal, and a terminal that performs payment is referred to as a payment approval terminal. Also, a reference numeral 180a denotes a controller of the payment request terminal, 151 a denotes a display unit of the payment request terminal, 180b denotes a controller of the payment approval terminal, and 151b denotes a display unit of the payment approval terminal. In addition, for explaining functions applied to both of the payment request terminal and the payment approval terminal, both of the terminals are referred to as a mobile terminal. A reference numeral 180 denotes a controller of the mobile terminal and 151 denotes a display unit of the mobile terminal.

Also, an operation of performing payment between the payment request terminal and the payment approval terminal is referred to as a payment performing system.

Hereinafter, description will be given in more detail of a method of performing payment in a payment request terminal, with reference to FIG. 2A.

First, the payment request terminal according to the present invention may transmit payment request information to an external terminal through wireless communication (S110).

The payment request terminal according to the present invention may transmit payment request information to the payment approval terminal to request for payment approval information from the payment approval terminal.

A payment request function for transmission and reception of the payment request information may be executed by an application associated with a function of performing transmission and reception of information with an external terminal, and an application associated with a function of receiving information related to external products (goods or items). Here, the application may refer to an application program executable in a mobile terminal.

The payment application which is an application for performing the payment function may be stored in a memory of a mobile terminal upon production of the mobile terminal, or downloaded from an external server according to a user selection. Here, the external server is a server which stores therein execution files of applications, and examples of the external server may include Android market, Google play and the like.

The application associated with the function of performing the transmission and reception of the information with the external terminal may be a message application associated with a function of performing transmission and reception of messages with the external terminal, a call application associated with a function of performing transmission and reception of call signals with the external terminal, a social network service (SNS) application for performing transmission and reception of information with others who are unspecified through an external server, and the like. The message application, the call application, the SNS application and the like may be stored in a memory of a mobile terminal upon production of the mobile terminal, or downloaded from an external server according to a user selection.

An application associated with a function of receiving information relating to external goods may be associated with a function of activating an object recognition sensor, such as an image sensor, an infrared sensor, a supersonic sensor or the like, for recognizing the external goods. For example, the application associated with the function of receiving the information relating to the external goods may be an application associated with a camera function of capturing an image.

The controller 180a of the payment request terminal may execute one of the payment application, the application associated with the function of the information transmission and reception with the external terminal, and the application associated with the function of receiving the information relating to the external goods, on the basis of a user request, in order to transmit the payment request information.

The user request may be implemented in various manners, such as touch, button, voice, gesture and a motion of a terminal body. For example, the user request may be implemented in a manner of touching an icon associated with the payment application which is currently output on the display unit 151 a of the payment request terminal. Here, the controller 180 may execute the payment request function, in response to the touch applied to the icon associated with the payment application.

Also, the controller 180a of the payment request terminal may execute the payment request function based on a preset condition. For example, the controller 180a of the payment request terminal may execute the payment request function to transmit barcode information to an external terminal when an image received through a camera includes the barcode information. As another example, the controller 180a of the payment request terminal may determine a current position through a position reception module. When the current position is a store (or a shop), the controller 180a of the payment request terminal may execute the payment request function for transmitting the payment request information to the external terminal.

When the payment request function is executed, the controller 180a of the payment request terminal may output an execution screen indicating the payment request function.

The execution screen indicating the payment request function may include a payment request information input window, an identification information input window of an external terminal for transmitting the payment request information to the external terminal, graphic objects for editing the payment request information, and the like.

The payment request information input window may allow for an input of text, image and the like. For example, as illustrated in the first drawing of FIG. 3A, the payment request information input window may be an output window 300 of a preview image of an image received from a camera. Here, the controller 180a may capture an image received from the camera and use the captured image as the payment request information. For example, the controller 180a may analyze the captured image using a preset algorithm, and detect product-related information based on the image analysis result. Here, the conventional image analyzing schemes may be used as the preset algorithm. As another example, the payment request information input window may be configured to input product information pre-stored in the memory. In this instance, the user may input identification information regarding products pre-stored in the memory on the payment request information input window.

The payment request information input window may further include product information indicating at least one of the input products. For example, as illustrated in the first and second drawings of FIG. 3A, the payment request information input window may further include product information 310, 320 indicating at least one product.

The identification information input window of the external terminal for transmitting the payment request information to the external terminal may be configured to input identification information relating to the external terminal, such as phone number information on the external terminal and the like.

Graphic objects for editing the payment request information may include a graphic object associated with a function of adding a payment product or a payment item (i.e., a product to be paid), a graphic object associated with a function of deleting a payment product, a graphic object associated with a search for a product, and the like. Also, the graphic object for editing the payment request information may further include graphic objects associated with various additional functions relating to payment.

Also, the execution screen indicating the payment request function may be output together with an execution screen for transmitting and receiving information with the external terminal, or an execution screen indicating a function of receiving information related to the external product. For example, when the payment request function is executed while a message function is activated, the controller 180a may output an execution screen indicating the payment request function on one portion (or one region) of an input window for inputting a message. As another example, when the payment request function is executed while a call function is activated, the controller 180a may output the execution screen of the payment request function on one portion of an execution screen of the call function.

The payment request information may include information related to a payment store (or payment store information, i.e., information on a store to pay for), payment amount information, identification information relating to a payment requester, identification information relating to a payment approval terminal, payment request product information, and the like. The payment store information may include identification information related to the payment store (e.g., a business registration number, a store address, a phone number, etc.), product information sold at the payment store, discount information relating to the payment store, and the like. The payment amount information may be amount information related to a payment product, amount information related to products similar to the payment product, and the like. The identification information related to the payment requester may include phone number information, image information, fingerprint information and the like, related to the payment requester. The identification information on the payment approval terminal may be phone number information, image information, ID information and the like.

The payment request product information may include barcode information, tag information and the like, related to a product. Also, the payment request product information may be image information related to a product received through the camera 121.

Here, the controller 180a may extract the product information on the basis of the image information related to the product. In more detail, the controller 180a may extract identification information related to the product by analyzing the image information regarding the product. For example, the controller 180a may extract the barcode information from the image of the product.

Also, the payment product information may include information regarding one or more products. For example, as illustrated in the second drawing of FIG. 3A, the payment product information may include two product information 310 and 320.

The payment approval terminal receiving the payment request information may be a user-set terminal or a predetermined terminal upon transmission of the payment request information.

For example, the user having the payment request terminal may input identification information (e.g., phone number information) relating to the payment approval terminal for transmitting the payment request information thereto.

As another example, the controller 180a of the payment request terminal may predefine a payment approval terminal to receive the payment request information as a terminal of "Mother." In this instance, the controller 180a of the payment request terminal may automatically transmit the payment request information to the "Mother" terminal. Here, the present invention may change the predefined terminal into another terminal according to a user selection.

The controller 180a may transmit the payment request information to the payment approval terminal based on a user's control command. The user's control command may be implemented in various manners, such as touch, voice, gesture, eyesight detection, and the like. For example, as illustrated in the second drawing of FIG. 3A, the controller 180a may transmit the payment request information to the payment approval terminal, in response to a touch applied to a graphic object indicating a payment request information transmission function output on the display unit 151 a.

After the transmission of the payment request information, the payment request terminal according to the present invention may determine whether or not updated payment request information has been received, in response to the payment request information (S120).

The payment request terminal may receive the updated payment request information from the payment approval terminal after the transmission of the payment request information to the payment approval terminal. That is, upon receiving the payment request information, the payment approval terminal may update the payment request information, and transmit the updated payment request information to the payment request terminal.

The update of the payment request information may refer to changing at least one information included in the payment request information. For example, the payment approval terminal may update the payment request information by changing payment product information included in the payment request information.

Meanwhile, upon receiving the updated payment request information from the payment approval terminal, the controller 180a of the payment request terminal may transmit the payment request information prior to being updated or the newly-updated payment request information to the payment approval terminal (S130).

Upon receiving the updated payment request information after transmitting the payment request information, the controller 180a of the payment request terminal may output the updated payment request information on the display unit 151 a. Here, the controller 180a may re-change the updated payment request information based on a user request. When the payment request information is changed again, the controller 180a may go back to the step S110.

After transmission or retransmission of the payment request information, the controller 180a of the payment request terminal may receive at least one of payment approval information or payment card information.

The payment approval information may be information that the payment approval terminal has performed a provisional payment based on the payment request information. In more detail, the payment approval information may be information which is generated after the payment approval terminal performs payment according to the payment request information through an external server associated with the payment. That is, the payment approval information may be result information obtained after performing a payment procedure on the payment approval terminal.

Unlike this, the payment card information may be payment information which is set for the payment request terminal to directly perform payment, other than the payment approval terminal performing the payment according to the payment request information. That is, the payment card information may be information indicating that a payment product is not limited because the payment is not performed yet. In this instance, the payment approval terminal may immediately generate the payment card information, without the procedure for performing the payment.

Also, the payment card information is one-time information, and thus may be generated to be deleted from the memory 170 once the payment is performed. That is, the present invention may allow the payment card information to disappear once the payment is performed, so as to prevent unreasoning payment based on the payment card information.

Upon reception of at least one of the payment approval information and the payment card information, the controller 180a may output notification information, which notifies that the payment is available, on the display unit 151 a on the basis of the received at least one of the payment approval information and the payment card information. For example, as illustrated in the third drawing of FIG. 3A, when the payment approval information is received, the controller 180a may approach the payment request terminal to an external object associated with payment, to output the payment approval information 330 on the display unit 151 a, thereby performing the payment. The external object associated with the payment may be a payment machine, a card reader, a POS, and the like.

The controller 180a of the payment request terminal may unconditionally receive at least one of the payment approval information and the payment card information, or select reception or non-reception of at least one of the payment approval information and the payment card information to receive according to a user selection.

In case of receiving at least one of the payment approval information and the payment card information based on the user selection, the controller 180a may output on the display unit 151 a screen information for deciding whether or not to receive the at least one of the payment approval information and the payment card information. Here, the user may decide the reception of the payment approval information by using the screen information for deciding the reception or non-reception of the at least one of the payment approval information and the payment card information.

Here, when the user decides not to receive the at least one of the payment approval information and the payment card information, the controller 180a cannot perform payment for any product on the basis of the at least one of the payment approval information and the payment card information.

On the other hand, when the at least one of the payment approval information and the payment card information is received, the controller 180a may perform the payment on the basis of the received at least one of the payment approval information and the payment card information (S150).

The payment request terminal may support various payment methods. For example, the payment request terminal may support an NFC payment method and an MST payment method.

Here, the controller 180a may set one of a plurality of payment methods for performing payment. Here, the one payment method may be selected by the user, selected based on a preset condition, or selected based on payment approval information.

When the payment method is selected by the user, the controller 180a may output screen information for selecting one of the plurality of payment methods on the display unit 151 a. Here, the user may select the one payment method in various input methods, such as a touch input, a voice input, a gesture input and the like.

When the payment method is selected based on the preset condition, the preset condition may include, for example, a condition to be associated with a member store which has requested for payment, a condition associated with location information, a condition associated with a preset payment priority, a product-associated condition, a payment limit-related condition, a condition associated with a contact point with an external object relevant to a payment amount, and the like. The preset condition may be added or deleted by the user.

For example, in case where the preset condition is a payment priority-associated condition, when a first priority belongs to a first payment method and a second priority belongs to a second payment method, the controller 180a may first provide the first payment method so as for the payment to be performed by the first payment method. Then, when failing to perform the payment by the first payment method, the controller 180a may provide the second payment method as the second best.

As another example, in case where the preset condition is the payment limit-related condition, when the payment amount is over a preset amount, the controller 180a may first provide a first payment method to perform the payment by the first payment method. And, when the payment amount is below the preset amount, the controller 180a may provide a second payment method to perform the payment by the second payment method.

When the payment method is selected based on the payment approval information or the payment card information, the payment approval information or the payment card information may include information relating to the payment method. For example, when first payment method information is included in the payment approval information, the controller 180a may perform the payment for the product by the first payment method.

The controller 180a may transmit a signal to an external object, which is located within a close distance and associated with the payment amount, on the basis of at least one of the payment approval information or the payment card information. Here, the controller 180a may perform the payment by one of a plurality of payment methods supported by the payment request terminal. For example, when the payment is performed by the NFC payment method, the controller 180a may transmit at least one of the payment approval information and the payment card information to an adjacent external object associated with the payment amount on the basis of the NFC payment method. As another example, when the payment is performed by the MST payment method, the controller 180a may transmit at least one of the payment approval information and the payment card information to an adjacent POS on the basis of the MST payment method.

Here, the controller 180a may decide whether or not to transmit a signal to the POS on the basis of a reception or non-reception of additional authentication information. For example, the controller 180a may transmit the signal to the POS when the additional authentication information is received, and may not transmit the signal to the POS when the additional authentication information is not received.

Meanwhile, once receiving the at least one of the payment approval information and the payment card information, the POS may compare the at least one of the payment approval information and the payment card information with pre-stored information, to decide whether or not to perform the payment. The POS may perform the payment according to various conventional payment methods. For example, the POS may approve the payment when the payment approval information matches the pre-stored information. On the other hand, the POS may not approve the payment when the payment approval information does not match the pre-stored information.

Afterwards, the controller 180a may determine whether or not the payment has been approved. The payment approval may refer to that the POS has approved the payment for the product based on the at least one of the payment approval information and the payment card information. The payment rejection may refer to that the POS has not approved the payment for the one product based on the at least one of the payment approval information and the payment card information.

To determine whether or not the payment has been approved, the controller 180a may receive a feedback signal from the POS, or a signal associated with a completed payment from an external server associated with the payment. The external server may be a server of a card manufacturer.

Upon receiving the feedback signal or the completed payment-related signal, the controller 180a may determine that the payment has been approved. On the other hand, when the feedback signal or the completed payment-related signal is not received within a preset time, the controller 180a may determine that the payment has been rejected. Or, upon receiving a feedback signal indicating a rejection of the payment or a signal indicating the rejected payment from the external server, the controller 180a may determine that the payment has been rejected.

When the payment for the one product has been rejected according to the determination result, the controller 180a may output payment failure information informing of the rejected payment. Also, the controller 180a may transmit payment rejection information indicating the rejected payment to the payment approval terminal.

When one of the payment completion information or the payment rejection information is received, the controller 180b of the payment approval terminal may output the received one information on the display unit 151 b.

When the payment completion information is received according to the determination result, the controller 180a of the payment request terminal may delete the payment approval information and the payment card information from the memory of the payment request terminal (S160).

When the payment completion information is received, the controller 180a may delete the payment approval information and the payment card information from the memory 170. For instance, as illustrated in the fourth drawing of FIG. 3A, when the payment is completed, the controller 180a may output the payment completion information 340 on the display unit 151 a.

Also, the controller 180a may delete the payment approval information and the payment card information from the memory 170 thereof to restrict the payment based on the payment approval information and the payment card information. In this instance, as illustrated in the fourth drawing of FIG. 3A, the controller 180a may output on the display unit 151 a notification information notifying that the at least one of the payment approval information and the payment card information has been deleted.

In this manner, the restriction of the payment from being performed based on the payment approval information and the payment card information may be called a deactivation of the payment approval information. The deactivation of the payment approval information may also be named as other terms by those skilled in the art.

The deactivation of the payment approval information may refer to deleting or changing the payment approval information such that the payment cannot be performed any more based on the payment approval information. When the payment approval information is deactivated, the controller 180a is unable to access the payment approval information any more. On the other hand, an activation of the payment approval information may refer to storing or generating the payment approval information such that the payment can be performed based on the payment approval information.

Also, when the payment approval information is deactivated, the controller 180a may not output the payment approval information on the display unit 151 a any more, output the payment approval information in an inactive state, or output the payment approval information by changing into payment completion information.

For example, the controller 180a may control the payment approval information to disappear from the display unit 151 a. That is, the user of the payment request terminal may neither view the payment approval information any more on the display unit 151 a, nor perform payment any more based on the payment approval information.

The controller 180a may also output the payment approval information in the inactive state. For example, the controller 180a may output the payment approval information by changing a color thereof into a gray color, or by changing the payment approval information such that information included in the payment approval information cannot be output.

Also, the controller 180a may output the payment approval information by changing into the payment completion information. In this instance, the controller 180a may output the payment completion information instead of the payment approval information, in spite of the request for outputting the payment approval information. That is, the user cannot view the payment approval information any more after the payment approval information is deactivated.

The payment completion information may include at least one of information related to the product, price information on the product, payment time information, and payment store information. Also, the controller 180a may transmit the payment completion information to the payment approval terminal. For example, as illustrated in the fourth drawing of FIG. 3A, the controller 180a may output payment completion information 340.

Meanwhile, after performing the payment, the controller 180a may further store extra amount information included in the payment approval information in the memory 170, independent of the payment approval information and the payment card information. In this instance, the controller 180a may perform payment later based on the extra amount information. For example, the controller 180a may store the extra amount information included in the payment approval information in the memory 170, even though the payment approval information and the payment card information are deleted from the memory 170.

Hereinafter, description will be given in more detail of a method in which the payment approval terminal which has received the payment request information generates payment approval information based on the payment request information. FIG. 2B is a flowchart illustrating a method in which a payment approval terminal which has received payment request information generates payment approval information on the basis of the payment request information.

The controller 180b of the payment approval terminal may receive payment request information regarding a particular product from the payment request terminal (S210).

When the payment request information is transmitted from the payment request terminal, the controller 180b of the payment approval terminal may provide a user with notification information indicating that the payment request terminal has been transmitted.

The notification information may be provided in at least one of visual, audible and tactile manners. For example, when the payment request information is transmitted from the payment request terminal, the controller 180b may output notification information on one portion of the display unit 151b. The one portion of the display unit 151b, for example, may be a portion of a status display region for providing status information regarding the mobile terminal. As another example, the controller 180b may output the transmission of the payment request information from the payment request terminal by voice. As another example, the controller 180b may provide the notification information by outputting light through a light-emitting unit (e.g., a lamp) provided in the mobile terminal. In addition, the controller 180b may provide the notification information by combination of those mentioned output methods.

Also, when the payment request information is received from the payment request terminal, the controller 180b may decide whether or not to receive the payment request information. For example, when the transmission of the payment request information is sensed, the controller 180b may output screen information for deciding the reception or non-reception of the payment request information on the display unit 151 b. In this instance, the user may decide the reception or non-reception of the payment request information by applying a touch to the screen information. Here, the controller 180b may reject, put off or receive the reception of the payment request information.

When the reception of the payment request information is rejected, the controller 180b may transmit notification information to the payment request terminal to notify that the reception of the payment request information has been rejected. Accordingly, the user of the payment request terminal may recognize the rejection of the payment request.

When the reception of the payment request information is put off, the controller 180b may output notification information on one portion of the display unit 151b to notify the put-off state of the reception of the payment request information. Also, the controller 180b may transmit notification information to the payment request terminal to notify that the payment request information has not been received yet. Accordingly, the user of the payment request terminal may recognize that the payment request information has not been received yet by the payment approval terminal.

When the payment request information is received, the controller 180b of the payment approval terminal may output the payment request information on the display unit 151 b. For example, as illustrated in the first drawing of FIG. 3B, the controller 180b may output payment request product information, payment amount information and identification information regarding the payment request terminal on the display unit 151 b.

The controller 180b may also transmit notification information to the payment request terminal to notify that the payment request information has been received. Accordingly, the user of the payment request terminal can know that the user of the payment approval terminal has recognized the payment request information

When the payment request information is received, the controller 180b of the payment approval terminal may change the payment request information (S220).

For the payment approval, the controller 180b may select one or more products from at least one product included in the payment request information. That is, the controller 180b may selectively approve the payment of the one or more products among the at least one product included in the payment request information.

The controller 180b may also add at least one new product which has not been included in the payment request information into the payment request information. In this instance, the controller 180b may add the at least one new product into the payment request information on the basis of store information included in the payment request information.

The store information may further include product information that the store is selling, discount information of the store, and store-related URL information. Here, the controller 180b may download information on products which the store is selling from an external server on the basis of the URL information included in the store information. Or, the controller 180b may receive the product information sold at the store directly from the payment request terminal.

Upon adding at least one new product to the payment request information, in addition to products, which are included in the payment request information among the products sold at the store, the controller 180b may transmit notification information to the payment request terminal to notify that the at least one new product has been added. In this instance, the user of the payment request terminal may recognize that the at least one product has been added in the payment request information.

Meanwhile, the controller 180b may change the other information, besides the product information included in the payment request information. For example, the controller 180b may change a payment store.

When the payment request information has changed, the controller 180b of the payment approval terminal may transmit the changed payment request information to the payment request terminal (S231).

When the payment request information has changed, the controller 180b may transmit the changed payment request information to the payment request terminal. In this instance, the payment request terminal may output screen information indicating the changed payment request information on the display unit 151 a. Also, the payment request terminal may add and delete (or update) again the products, which have been added and deleted in the payment approval terminal, by the same method employed in the payment approval terminal. That is, the payment request terminal and the payment approval terminal may update the payment request information in real time while performing the payment function. Accordingly, the present invention can provide a method of negotiating products in real time between the payment request terminal and the payment approval terminal.

When the payment request terminal retransmits the payment request information based on the updated payment request information, the payment approval terminal may re-receive the payment request information (S232). In this instance, the controller 180b of the payment approval terminal may go back to the step S220.

When the change in the payment request information has completed, the controller 180b of the payment approval terminal may generate at least one of payment approval information and payment card information based on the changed payment request information, and transmit the generated information to the payment request terminal (S240).

The controller 180b of the payment approval terminal may not change the payment request information or complete the change in the payment request information when the payment request information is not additionally received from the payment request terminal after changing the payment request terminal.

The controller 180b may generate at least one of the payment approval information and the payment card information for approving the payment when the change in products to be included in the payment request information is completed.

The payment approval information may be payment result information performed by the payment approval terminal based on the payment request information. That is, the payment approval information may include information indicating that a provisional payment for the products included in the payment request information has been performed by the payment approval terminal. The provisional payment may refer to a payment state that the payment for the products included in the payment request information has been performed but those products have not been taken over yet.

The payment card information may include information for performing direct payment in the payment request terminal. That is, the payment card information may be information which includes information required for the payment such that the payment is not performed in the payment approval terminal but performed in the payment request terminal.

The payment card information may include payment-related information, such as card information for payment, security information, identification information, maximum payment amount information, minimum payment amount information, payment store information, location information, time information and the like.

The card information may include card magnetic information, card-specific number information, card-available period information, card security information, card manufacturer information, card-usable country information, card name information and the like. The card magnetic information may be information for transmitting a magnetic signal to an external object associated with payment for a charge. The payment approval information may include information for performing payment in the payment request terminal.

The security information may be card password information, security element (SE) information, card validation code (CVC) information, biometric information (or biometric data) relating to a card owner, and the like.

The identification information, which is unique information related to the payment approval terminal, may be fingerprint information relating to a user of the payment approval terminal, phone number information of the payment approval terminal, subscriber identification module (SIM) of the payment approval terminal, universal subscriber identification module (USIM) of the payment approval terminal, SE information of the payment approval terminal.

The maximum payment amount information may be information relating to the maximum amount of money to be payable, and the minimum payment amount information may be information relating to the minimum amount of money to be payable. The payment amount information may be information relating to an amount of money for a payment request product. The payment store information may be identification information relating to a store for which payment is expected, and may be member store information and the like, for example.

The location information may information indicating a payable position, for example, location information relating to a store to be payable, radius information relating to a position to be payable. Here, the controller 180a may fail to perform the payment based on the payment approval information when it is moved out of the payable position.

The time information may be information indicating a payable time. For example, the controller 180a may perform the payment between 6 pm and 8 pm when the time information is set from 6 pm to 8 pm. Here, when attempting to perform the payment at a time which does not belong to the range from 6 pm to 8 pm, the controller 180a may fail the payment. The generation of the payment card information will be described in more detail hereinafter.

Also, the payment card information may be deleted from the memory 170 once the payment is performed based on the payment card information. That is, the payment card information is one-time payment information, and thus may be deleted from the memory 170 when it is determined that the payment has been approved. When the payment card information is deleted, the controller 180a cannot perform the payment any more based on the payment card information.

The controller 180b may provide a setting screen of the payment approval information and the payment card information, in response to a user request. For example, as illustrated in the first and second drawings of FIG. 3B, the controller 180b may provide the setting screen of the payment approval information and the payment card information, in response to a drag input applied in a preset direction.

The setting screen of the payment approval information and the payment card information may include at least one of a payment approval information setting screen and a payment card information setting screen.

The payment approval information setting screen may include screen information for setting a payment means (e.g., card payment, real-time transfer, mobile payment, remittance payment, etc.), a payment amount, a payment product, identification information and the like.

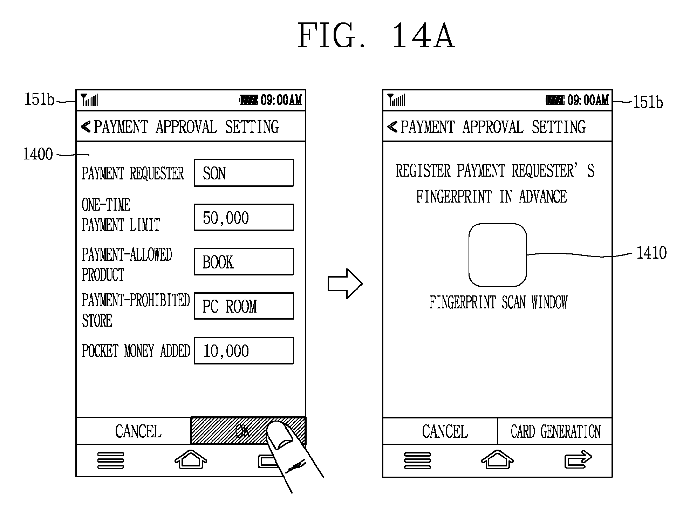

The payment card information setting screen may include screen information for setting payment requester information, card information, payment amount information, payment store information, location information, time information, authentication information and the like. For example, as illustrated in the first drawing of FIG. 14A, the controller 180b may provide a setting screen for the payment card information for performing card payment.

The card information may be input in the form of text through a keyboard (here, the keyboard may include both a physical keyboard and a touch-sensitive keyboard), or input using image analysis information related to an image received through a camera. For example, when a card image is received through a camera, the controller 180b may analyze the card image, extract at least one of card-specific number information, card-available period information and card identification information, and store the extracted information as the card information.

The authentication information may be security information for security upon performing the payment. The security information may be user's biometric data, code information, and the like. The biometric data may be information for identifying the user, and may include information relating to a fingerprint, a heart rate, an iris, a face recognition and the like. The code information may be password information, pattern information, knock code information.

The controller 180b may compare the authentication information with pre-stored authentication information. When the authentication information matches the pre-stored authentication information according to the comparison result, the controller 180b may generate the payment approval information. For example, the controller 180b may compare input fingerprint information with pre-stored fingerprint information. When the input fingerprint information matches the pre-stored fingerprint information, the controller 180b may generate the payment card information.

If the authentication information does not match the pre-stored authentication information according to the comparison result, the controller 180b may not generate the payment card information. In this instance, the controller 180b may output notification information on the display unit 151b to notify the non-match between the authentication information and the pre-stored authentication information.

Also, the user may input each information appropriate for the payment amount information, payment store information, location information, time information and the like, through the user input unit.

When at least one of the payment approval information and the payment card information is generated, the controller 180b may transmit the at least one of the payment approval information and the payment card information to the payment request terminal, in response to a user request.

For example, as illustrated in the second drawing of FIG. 3B, the controller 180b may transmit the at least one of the payment approval information and the payment card information to the payment request terminal, in response to a touch applied to a graphic object associated with a payment approval function output on the display unit 151 b of the payment approval terminal.

As illustrated in the third drawing of FIG. 3B, the controller 180b may transmit the payment approval information. In this instance, the controller 180b may output payment completion information, which includes information relating to a product for which payment has been approved, on the display unit 151 b.

Or, as illustrated in the fourth drawing of FIG. 3B, the controller 180b may transmit the payment card information. In this instance, the controller 180b may output information, which indicates that the payment card information has been transmitted, on the display unit 151 b.

The foregoing description has been given of the method of performing payment in the payment request terminal and the payment approval terminal according to the present invention. According to the method, the payment can be performed directly in the payment request terminal and a representation payment may be performed in the payment request terminal by using the payment approval terminal. Also, the payment approval terminal can request for payment for an additional product. Therefore, the present invention can allow not only for simply approving the payment request but also for performing the representation payment for a product requested by the payment approval terminal.

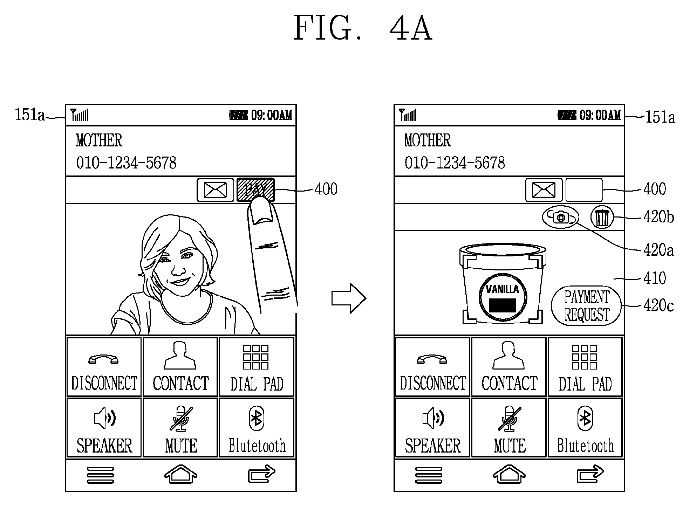

Hereinafter, description will be given of various methods of executing a payment request function in a payment request terminal according to the present invention. FIGS. 4A to 4F are conceptual views illustrating a method of executing a payment request function in a payment request terminal.

The payment request terminal may execute a payment request function in order to request for payment from a payment approval terminal.

The payment request function may be executed by a payment application, an application associated with a function of performing an information transmission and reception with an external terminal, and an application associated with a function of receiving information relating to external products. Here, the application may refer to an application program executable in a mobile terminal.

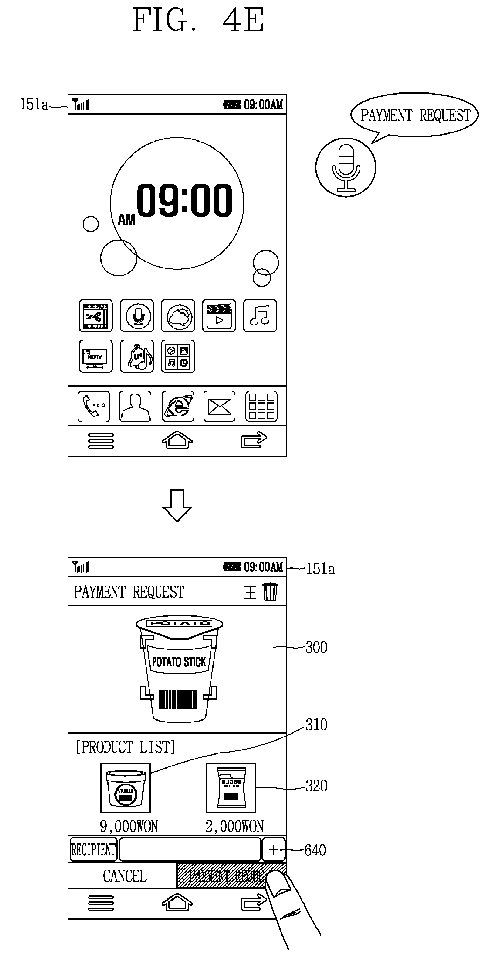

When the payment request function is executed by the payment application, the controller 180a may execute the payment application in response to a user request. The user request may be applied in various manners, such as a touch manner, a voice input manner, a gesture input manner and the like. For example, as illustrated in the first and second drawings of FIG. 4E, the controller 180a may execute the payment application based on a voice command.

The application associated with the function of performing the information transmission and reception with the external terminal may be a call application for transmitting and receiving a call signal with an external terminal, a video call application for transmitting and receiving a video and a call signal with an external terminal, a message application for transmitting and receiving messages with an external terminal, and the like.

Here, the application associated with the function of performing the information transmission and reception with the external terminal may further execute a payment request function. To this end, the application associated with the function of performing the information transmission and reception with the external terminal may include the payment request function.

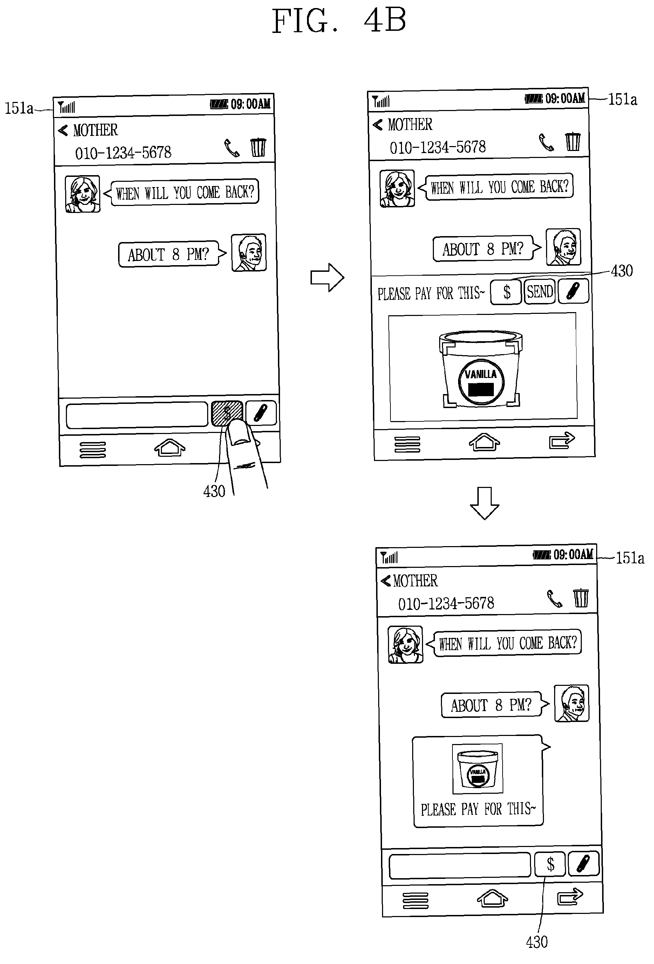

For instance, as illustrated in the first drawing of FIG. 4A, an execution screen for a call function may further include a graphic object 400 which indicates the payment request function. As another example, as illustrated in the first drawing of FIG. 4B, an execution screen of a message function may further include a graphic object 430 associated with payment.

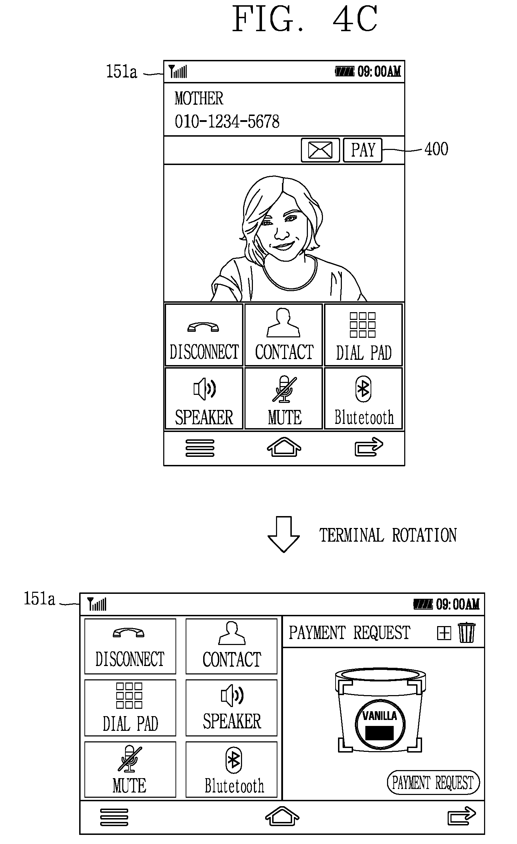

As another example, as illustrated in the first drawing of FIG. 4C, during an execution of a video call function, when a state of a mobile terminal main body matches a preset state, the controller 180a may execute the payment request function along with the video call function. For example, during the execution of the video call function, when the main body of the mobile terminal is rotated by a preset angle or more centering on a reference line having a direction corresponding to the gravity direction, the controller 180a may execute the payment request function. For example, when a 90-degree rotation of the main body of the mobile terminal centering on the reference line is sensed, the controller 180a may execute the payment request function.

Here, the controller 180a may receive an image for a payment request product from a camera 121b provided on a rear surface of the mobile terminal, and a user's facial image from a camera 121 a provided on a front surface of the mobile terminal. Also, the payment request product and the user's facial image may all be output on the display unit 151 a.

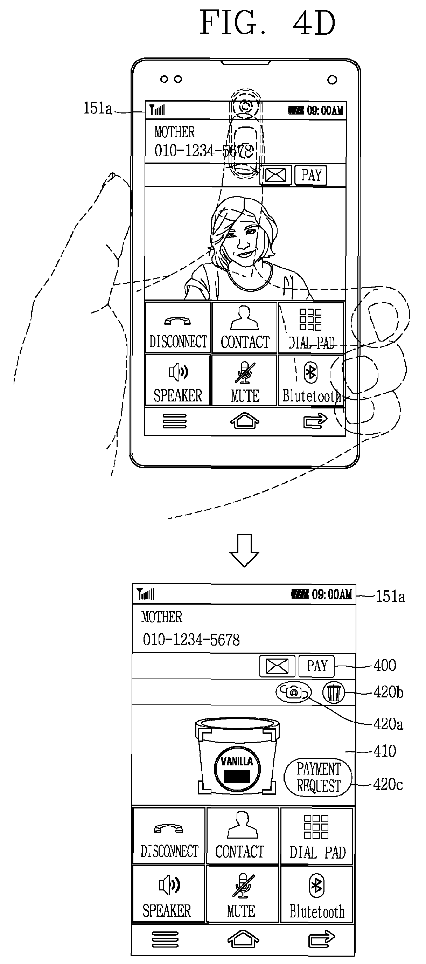

As another example, as illustrated in the first drawing of FIG. 4D, during an execution of a video call function, when the user's payment request is received through a user input unit, the controller 180a may execute the payment request function. Here, the user input unit may be provided on at least one of front, rear and side surfaces of the mobile terminal.

Here, when the payment request function is executed, the controller 180a may output an execution screen associated with the payment request function on one portion of an execution screen of the information transmission and reception function with the external terminal.

For example, as illustrated in the second drawings of FIGS. 4A and 4B, the controller 180a may output the execution screen of the payment request function on the one portion of the execution screen of the information transmission and reception function with the external terminal, in response to a touch applied to the graphic object 400 indicating the payment request function. As another example, as illustrated in the second drawings of FIGS. 4C and 4D, when the payment request function is executed, the controller 180a may output an image associated with a product, instead of a counterpart's image which is currently output on the display unit 151 a due to the video call.

The execution screen of the payment request function may include a preview image 410 of an image received from the camera, a graphic object 420a associated with a function of deciding whether or not to receive an image from one of the front and rear cameras, a graphic object 420b associated with a function of deleting a payment product, and a graphic object 420c associated with a function of transmitting payment request information.

When the payment request function is executed by the information transmission and reception function with the external terminal, the controller 180a may provide the payment request function by associating with the information transmission and reception function with the external terminal.

That is, when the payment request function is executed while the information transmission and reception function with the external terminal is executed, the controller 180a may set the external terminal to a payment approval terminal. The controller 180a may then transmit the payment request information to the external terminal with which the information transmission and reception is performed.

For example, as illustrated in the third drawing of FIG. 4B, when the payment request function is executed during transmission of a message to "Mother" terminal, the controller 180a may transmit the payment request information to the "Mother" terminal which is the target to which the message is transmitted. That is, the controller 180a may execute the payment request function by using identification information related to the external terminal while performing the information transmission and reception function with the external terminal.

Also, when the payment request function is executed by the application associated with the function of receiving the information related to the external product, the controller 180a may execute the payment request function on the basis of the external product-related information. The function of receiving the external product-related information may be a function of receiving image information related to the external product through the camera 121.

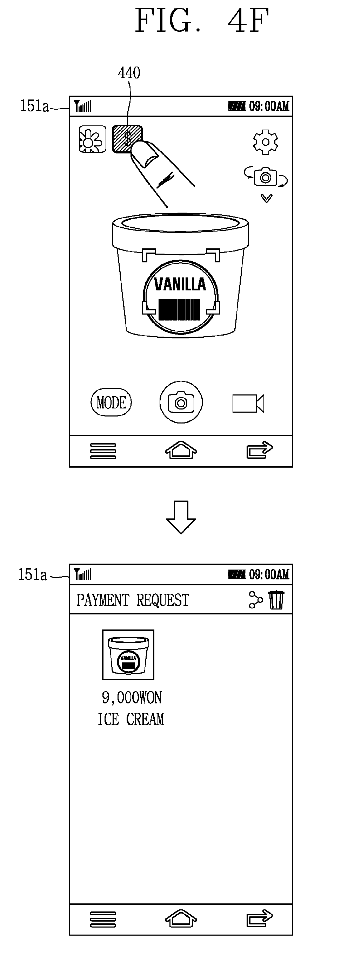

For example, as illustrated in the first drawing of FIG. 4F, the controller 180a may include a graphic object 440 associated with the payment request function in an execution screen of the function of receiving the image of the external product through the camera 121.

Here, as illustrated in the first and second drawings of FIG. 4F, when the graphic object 440 associated with the payment request function is selected, the controller 180a may execute the payment request function using the image of the external product captured by the camera 121.

The foregoing description has been given of the various methods of executing the payment request function. According to those methods, the user can execute the payment request function independently or by interoperating functions of other applications.

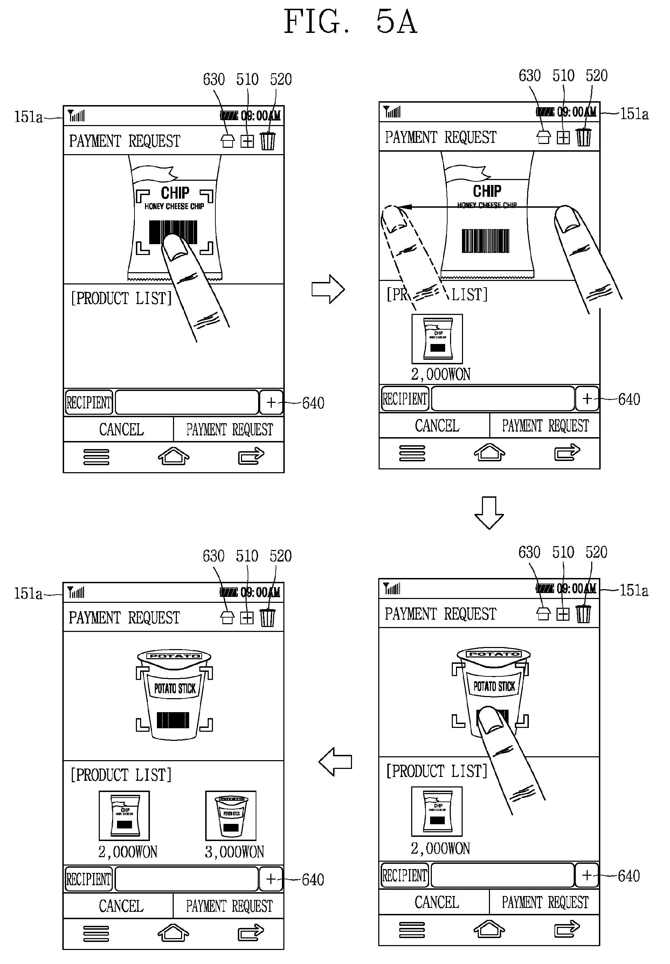

Hereinafter, description will be given of a method of generating payment request information in a payment request terminal. FIGS. 5A to 5C are conceptual views illustrating a method of generating payment request information in a payment request terminal.

When a payment request function is executed, the controller 180a of the payment request terminal may output an execution screen of the payment request function on one portion of the display unit 151 a.

Here, referring to the first drawing of FIG. 5A, the execution screen of the payment request function may include screen information for inputting a payment request product, product information indicating a payment request product input by a user, a graphic object 510 associated with a function of adding a payment request product, and a graphic object 520 associated with a deletion of a payment request product. Here, the payment request information, as aforementioned, may include payment store information, payment amount information, payment requester identification information, payment request product information and the like.

When the payment request function is executed, the controller 180a may input the payment request product information, in response to a user's control command. For example, as illustrated in the first drawing of FIG. 5A, the controller 180a may capture an image corresponding to the payment request product through a camera.

The controller 180a may also receive information regarding one or more payment request products. Here, the controller 180a may add the payment request product, using the graphic object 510 associated with an add function of the payment request product or in response to a touch applied to the display unit 151a.

For example, as illustrated in the second drawing of FIG. 5A, when a preset touch is sensed, the controller 180a may activate the camera 121 for inputting information regarding an additional payment request product. Here, as illustrated in the third and fourth drawings of FIG. 5A, the controller 180a may capture image information related to the additional payment request product through the camera 121, and add the captured image information in the payment request product information.

As another example, although not illustrated, when the graphic object 510 associated with the add function of the payment request product, the controller 180a may activate the camera 121 to add the payment request product.

Also, after the input of the information regarding the one or more payment request products, the controller 180a may exclude (or delete) at least one of the one or more payment request products from the payment request product information.

Here, the controller 180a may delete the payment request product using the graphic object for deleting the payment request product or in response to a touch applied to the payment request product.

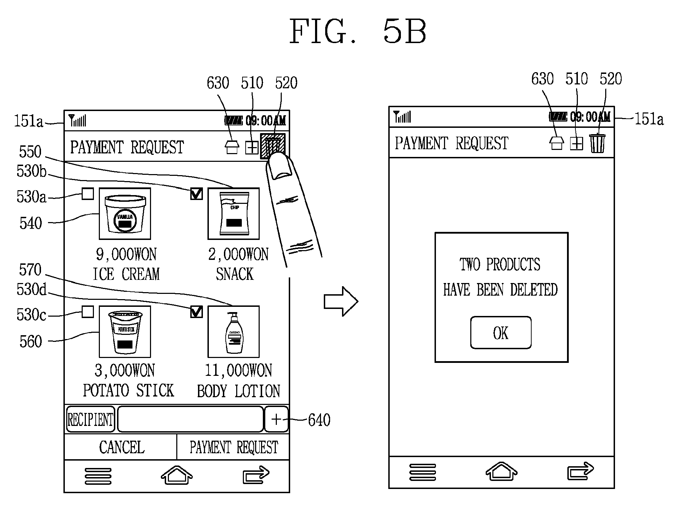

For example, when the payment request product is deleted by using the graphic object for the deletion, as illustrated in the first drawing of FIG. 5B, the controller 180a may output a plurality of select boxes 530a, 530b, 530c, 530d adjacent to output portions of a plurality of payment request products 540, 550, 560, 570, respectively, to select one or more products (e.g., 550, 570) from the payment request products 540, 550, 560, 570. Here, the controller 180a may select the one or more products 550, 570, in response to a touch applied to the corresponding select box 530a, 530b, 530c, 530d.

As illustrated in the first and second drawings of FIG. 5A, after the one or more products 550, 570 are selected, the controller 180a may delete the selected one or more products 550, 570, in response to a touch applied to the graphic object 520 associated with the deletion of the payment request product. Also, as illustrated in the second drawing of FIG. 5B, when the one or more products 550, 570 are deleted, the controller 180a may output notification information on the display unit 151 a to notify that the one or more products 550, 570 have been deleted.

When the payment request product is deleted in the touching manner, the controller 180a may delete at least one product, in response to a preset touch applied to the at least one payment request product.

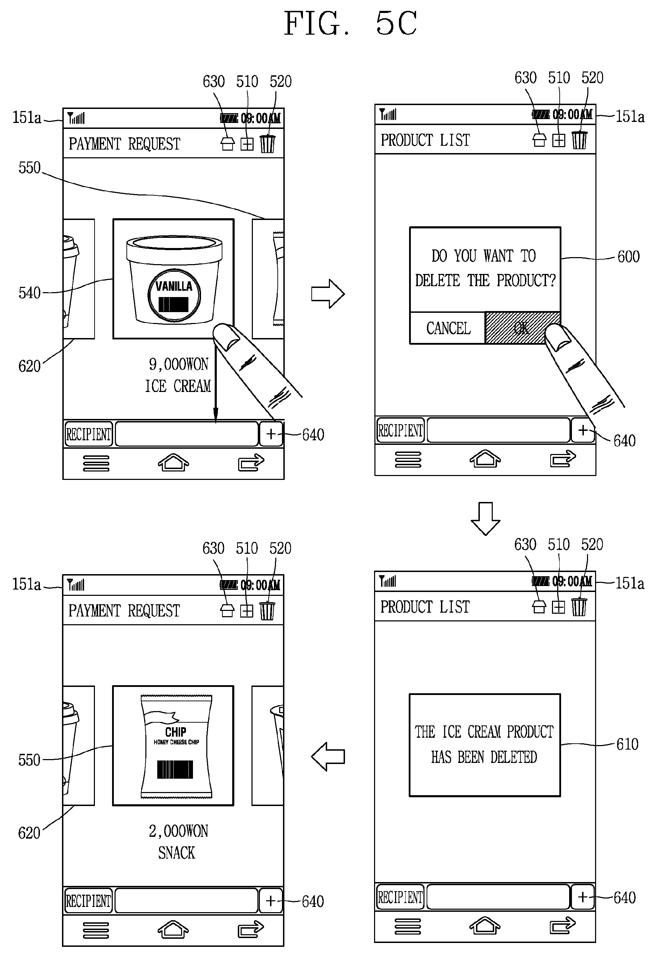

For example, as illustrated in the first drawing of FIG. 5C, when a drag input is applied to one product 540 of at least one payment request product 620, 540, 550 in one direction equal to the gravity direction, the controller 180a may delete the one payment request product 540.

Here, the controller 180a may immediately delete the one payment request product 540 in response to the drag input applied, or provide notification information to the user to check whether or not to delete the one payment request product 540. For example, as illustrated in the second drawing of FIG. 5C, the controller 180a may output notification information 600 for the user to check whether or not to delete the one product 540, in response to the drag input.

When the one product 540 is deleted, the controller 180a may output information 610, which indicates that the one product 540 has been deleted, on the display unit 151 a.

Also, as illustrated in the fourth drawing of FIG. 5C, after the deletion of the one product 540, the controller 180a may not output the deleted one product 540 any more on the display unit 151 a.

Although not illustrated, in addition to the payment request product, payment store information, payment amount information, payment requester identification information, payment approval terminal identification information, and payment request product information may also be deleted, changed or added according to the similar method to the payment request product. For example, the controller 180a may add, delete or change at least one of the identification information relating to the payment approval terminal, based on the user's selection.

This may allow the user of the payment request terminal to variously set the payment request information. The foregoing description has been given of the method of generating the payment request information in the payment request terminal.

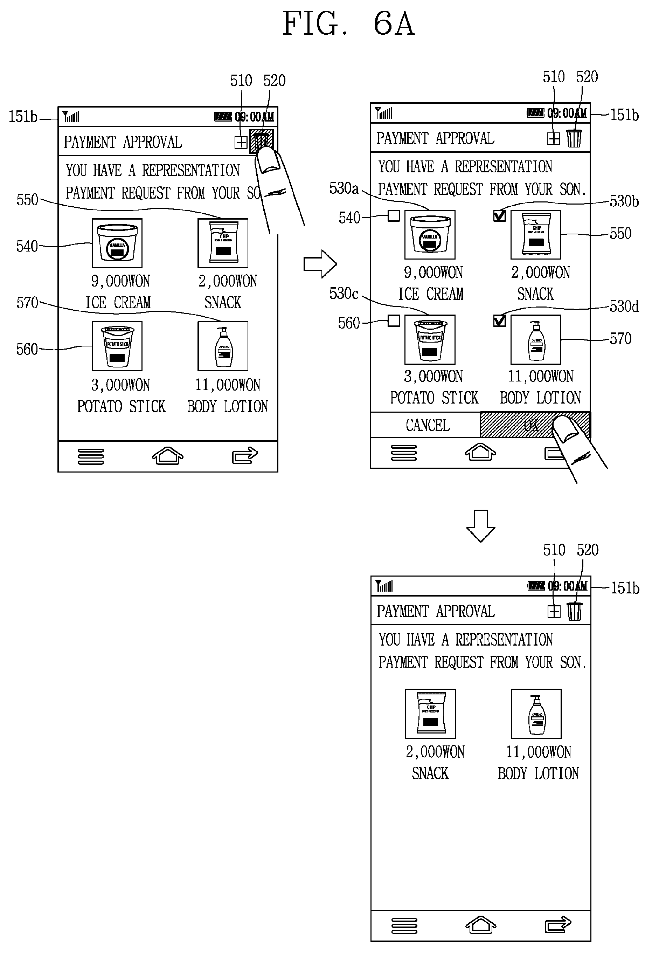

Hereinafter, description will be given of a method of generating payment approval information in a payment approval terminal which has received payment request information from a payment request terminal. FIGS. 6A, 6B, 7A, 7B, 8A, 8B, 9A, 9B, 10A to 10C, 11A and 11B are conceptual views illustrating a method of generating payment approval information in a payment approval information which has received payment request information from a payment request information.

The payment approval terminal may receive the payment request information from the payment request terminal. When the payment request information is received from the payment request terminal, the payment approval terminal may output the payment request information on the display unit 151 b.

Upon the reception of the payment request information, the controller 180b of the payment approval terminal may generate payment approval information based on the payment request information. As aforementioned, the payment approval information may include card information for payment, security information, identification information, maximum payment amount information, minimum payment amount information, payment amount information, payment store information, location information, time information, payment count information and the like.

The controller 180b may generate the payment approval information by deleting payment request product information included in the payment request information or adding new product information.

First, the controller 180b may delete at least one of a plurality of payment request products, which are included in the payment request information, from the payment request product information.

For example, as illustrated in the first and second drawings of FIG. 6A, the controller 180b may output select boxes 530a, 530b, 530c and 530d for deleting at least one of the plurality of payment request products at adjacent portions of the plurality of payment request products, respectively, in response to a touch applied to the graphic object 520 for the deletion the products output on the display unit 151 b.

Here, as illustrated in the second drawing of FIG. 6A, the controller 180b may delete at least one product 550, 570, which has been selected through the select boxes 530a, 530b, 530c and 530d, from the payment request product information. In this instance, as illustrated in the third drawing of FIG. 6A, the controller 180b may not output the deleted at least one product 550, 570 any more on the display unit 151b. On the other hand, the controller 180b may switch the deleted at least one product 550, 570 into a delete image for output. Here, the delete image may refer to an image indicating that the at least one product 550, 570 has been deleted from the payment request product information, for example, an X-marked image or a black box image.

Meanwhile, when the at least one product 550, 570 has been deleted from the payment request product information, the controller 180b may transmit notification information to the payment request terminal to notify that the at least one product 550, 570 has been deleted from the payment request product information.

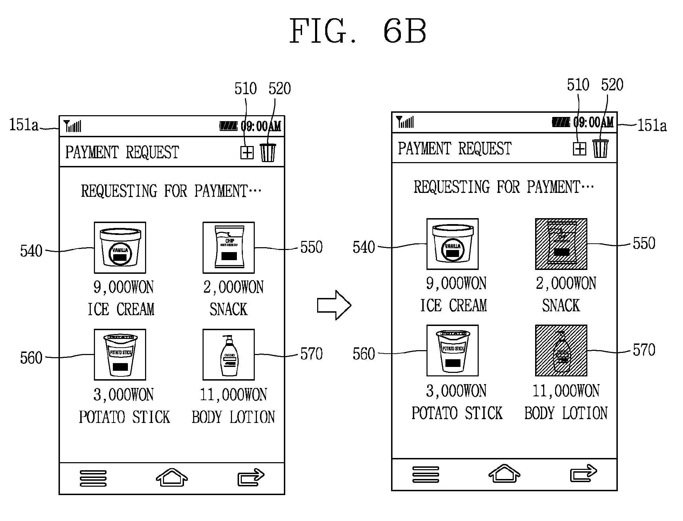

Here, upon receiving the notification information notifying the deletion of the at last one product 550, 570, the controller 180a of the payment request terminal may output the deleted at least one product 550, 570 to be visually distinguished from the other products. For example, as illustrated in the first drawing of FIG. 6B, before receiving the payment approval information from the payment approval terminal after the transmission of the payment request information, the controller 180a may output a plurality of payment request products 540, 550, 560 and 570 on the display unit 151 a. As illustrated in the second drawing of FIG. 6B, upon receiving notification information notifying that the at least one product 550, 570 has been deleted from the payment approval terminal, the controller 180a may change visual appearance of the at least one product 550, 570, for example, change light and darkness of the at least one product 550, 570, on the basis of the notification information, so as to be visually distinguished from the other products 540, 560.

Also, the controller 180b of the payment approval terminal may generate the payment approval information by adding at least one new product, in addition to the payment request product information included in the payment request information.

Here, the controller 180b may add a new product into the payment request information received from the payment request terminal, by using payment store information. The payment store information may include identification information regarding the payment store (e.g., a business registration number, a store address, a phone number, etc.), product information sold at the payment store, discount information relating to the payment store, and the like. Also, the payment store information may further include surrounding store information of the payment store, and product information sold at the surrounding stores.

In more detail, on the basis of the payment store information, the controller 180b may access a website providing information related to products which the store sells, execute an application associated with the payment store, or download a product list sold at the payment store from an external server to output on the display unit 151b. Also, the controller 180b may receive the information related to the product sold at the payment store directly from the payment request terminal, and output the received product information on the display unit 151 b.

In this instance, the controller 180b may add at least one new product which has not been included in the payment request information among those products sold at the payment store.

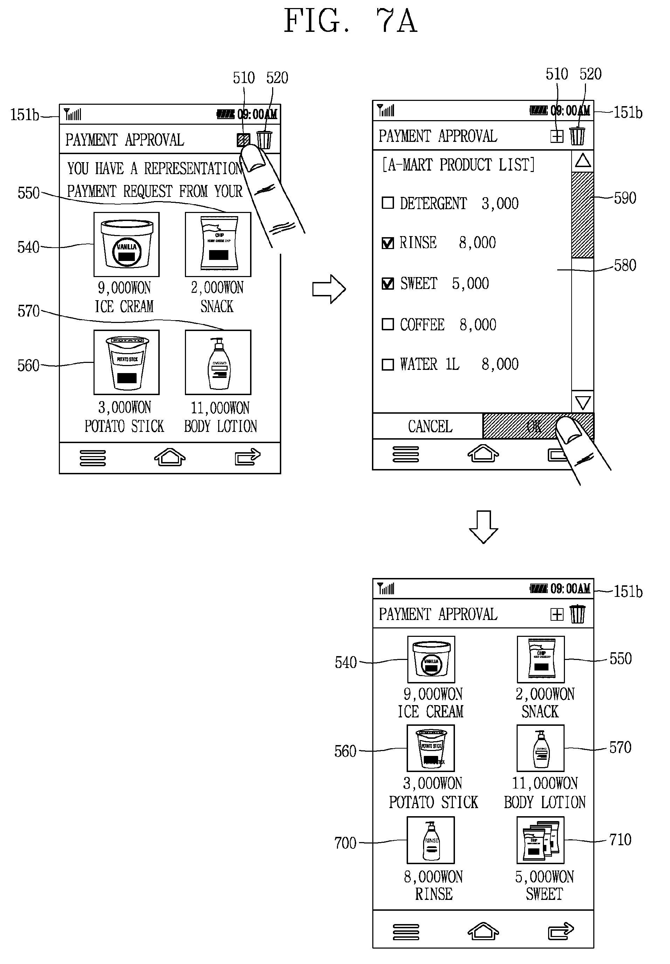

For example, as illustrated in the first and second drawings of FIG. 7A, the controller 180b may output a product list 590 including products sold at the payment store, in response to a touch applied to the graphic object 510 indicating a product add function. The product list 590 may include a plurality of products sold at the payment store, and price information relating to each product.

Here, when at least one 700, 710 of a plurality of products included in the product list 590 is selected, the controller 180b may include the at least one product into the payment request product information. When the at least one product is included in the payment request product information, as illustrated in the third drawing of FIG. 7A, the controller 180b may output the existing plurality of products 540, 550, 560 and 570 together with the selected at least one product 700, 710 on the display unit 151 b.

Meanwhile, the controller 180b may transmit information regarding the added product 700, 710 to the payment request terminal when the at least one product 700, 710 is added to the payment request product information.

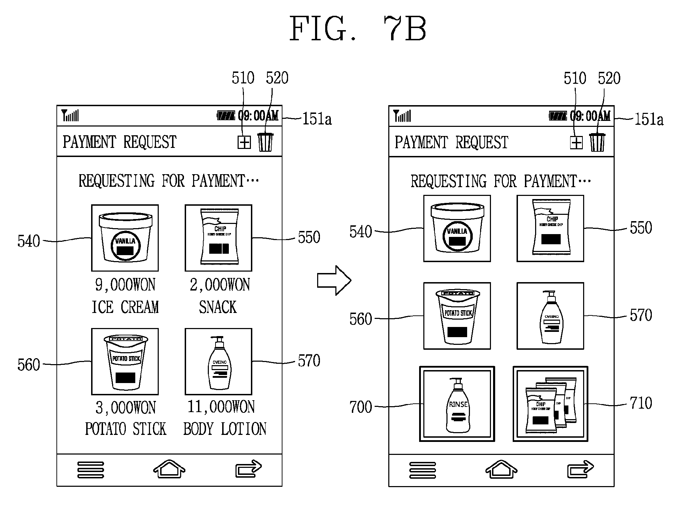

In this instance, the controller 180a of the payment request terminal may output the added product information along with the payment request products, which are present before the addition of the new product 700, 710, on the display unit 151 a. For example, as illustrated in the first and second drawings of FIG. 7B, when the added product information is received from the payment approval terminal, the controller 180a may output the added product 700, 710 as well as the payment request products on the display unit 151 a.

Here, the controller 180a may output the added product 700, 710 on the display unit 151 a in a manner of visually distinguishing the added product 700, 710 from the payment request products. For example, the controller 180a may output a graphic object, which indicates that the product 700, 710 has been added by the payment approval terminal, at an adjacent region of the added product 700, 710.

Also, the controller 180b may change at least one of the plurality of payment request products included in the payment request information into a new product. Here, the controller 180b may change the at least one product into a new product sold at the payment store on the basis of the payment store information included in the payment request information.

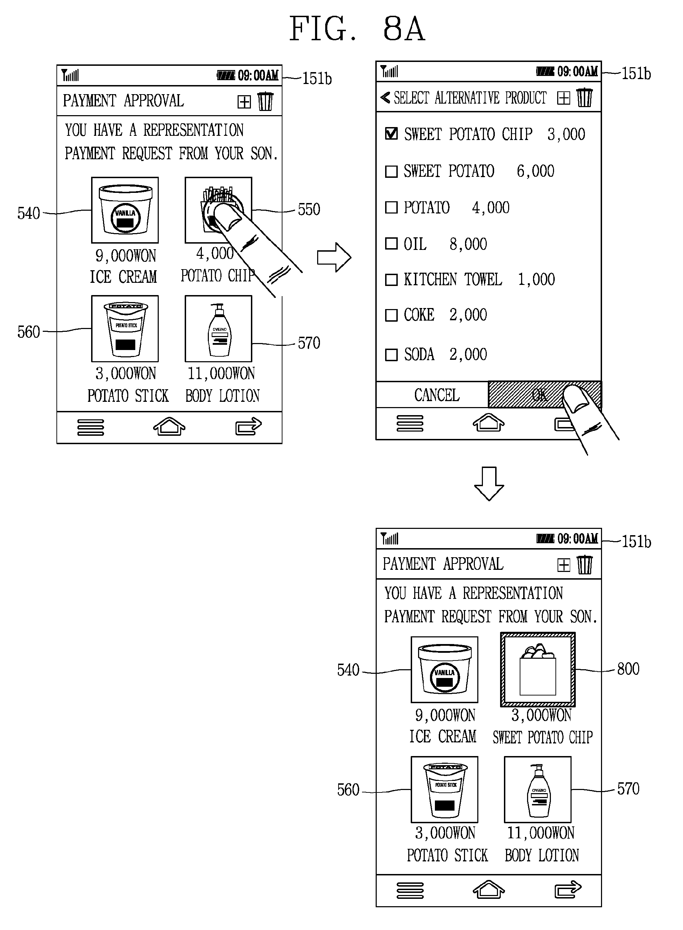

For example, as illustrated in the first drawing of FIG. 8A, while the plurality of payment request products 540, 550, 560 and 570 included in the payment request information are output on the display unit 151b, the controller 180b may execute a function of changing one product 550 of the plurality of payment request products 540, 550, 560 and 570 into a new product, in response to a preset touch applied to the one product 550. Here, the preset touch may be a short touch, a long touch, a multi touch and the like.

For example, as illustrated in the second drawing of FIG. 8A, when the preset touch is applied to the one product 550, the controller 180b may output a product list on the display unit 151b. The product list may include products sold at the payment store, or products included in a similar product group among the products sold at the payment store. The similar product group may be decided by product groups which are previously classified according to attributes of the products (e.g., a product line, a product type, etc.).

When at least one product is selected from the product list, the controller 180b may add the selected at least one product, instead of the one product 550, into the payment request product information. That is, the controller 180b may delete the one product 550 from the payment request product information, and add the selected at least one product into the payment request product information. Here, as illustrated in the third drawing of FIG. 8A, the controller 180b may change the one product 550 into the selected at least one product 800 and output the product 800 on the display unit 151 b.

Also, when the one product 550 is changed into the at least one product 800, the controller 180b may transmit notification information to the payment request terminal to notify that the one product 550 has been changed into the at least one product 800.

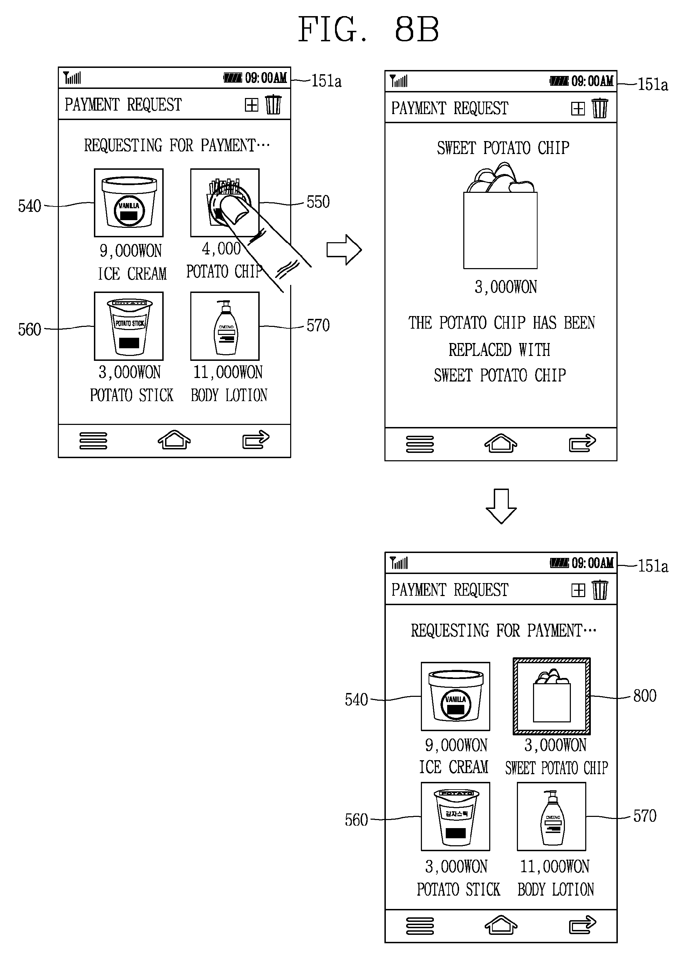

Here, upon reception of the notification information notifying the change into the at least one product 800, the controller 180a of the payment request terminal may output the notification information on the display unit 151 a. For example, as illustrated in the first and second drawings of FIG. 8B, the controller 180a may output notification information on the display unit 151 a to notify that the product 550 of "potato chip" into the product 800 of "sweet potato chip."

Also, as illustrated in the third drawing of FIG. 8B, the controller 180a may output the changed at least one product 800 to be visually distinguishable from the other plurality of products 540, 560 and 570 included in the payment request information before changed. For example, the controller 180a may further output a graphic object, which indicates that the at least one product 800 is the changed product, on an adjacent region to the at least one product 800.

The foregoing description has been given of the method of generating the payment approval information in the payment approval terminal which has received the payment request information from the payment request terminal. Accordingly, the payment approval terminal can also approve the payment request by changing various payment-related information, such as payment request products and the like, as well as simply approving the payment request. This may allow the user of the payment approval terminal to conveniently pay for his desired product at a remote place.

Also, the controller 180b of the payment approval terminal may generate the payment approval terminal by setting payment means information and payment security information.

The payment means may include various payment means, such as card payment, real-time transfer, mobile payment, remittance payment, etc. Here, the controller 180b may generate payment approval information using at least one of the plurality of payment means. The payment means may be set by a user.

Screen information related to the payment approval information may be output in a different manner based on the payment means information. For example, when the payment means is the card payment, the screen information related to the payment approval information may include a graphic object in a shape of a card. As another example, when the payment means is the real-time transfer, the screen information related to the payment approval information may include a graphic object in a shape of a bankbook.

Hereinafter, a case where the payment means is set to the card payment will be described. However, the present invention may not be limited to this but be applied to various payment means, such as real-time payment, mobile payment, remittance payment, etc.

When the setting of the payment request product is completed, the controller 180b may output screen information relating to the payment approval information in response to a reception of preset security information. That is, the controller 180b may provide screen information for payment when security information is input for payment.

For example, although not illustrated, while the payment request product is output on the display unit 151 b, the controller 180b may output a graphic object, which indicates notification information notifying that fingerprint information should be recognized, on one portion of the display unit 151 b. Here, the user may input the fingerprint information on the one portion of the display unit 151b, thereby being provided with the screen information for the payment.

Also, when the setting of the payment request product is completed, the controller 180b may output the screen information related to the payment approval information on the display unit 151 b, in response to a preset touch or a user input applied through a user input unit, irrespective of reception or non-reception of security information.

The preset touch may be a drag input or a flicking input applied to a front surface of the display unit 151b in a direction from bottom to top. Also, the user input unit may be an input unit which is located on at least one of front, side and rear surfaces of the main body of the payment approval terminal. The user input unit may receive at least one of a touch input, a fingerprint information input and a button input.

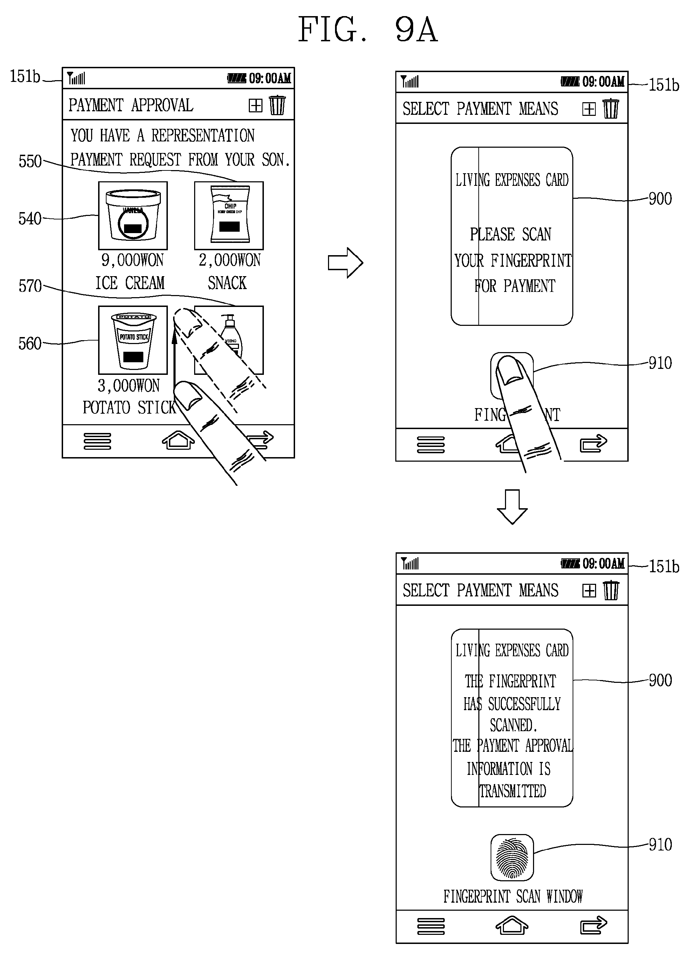

For example, as illustrated in the first and second drawings of FIG. 9A, while the payment request information is output on the display unit 151b, the controller 180b may output a card-shaped graphic object 900 on the display unit 151 b, in response to a preset touch applied.

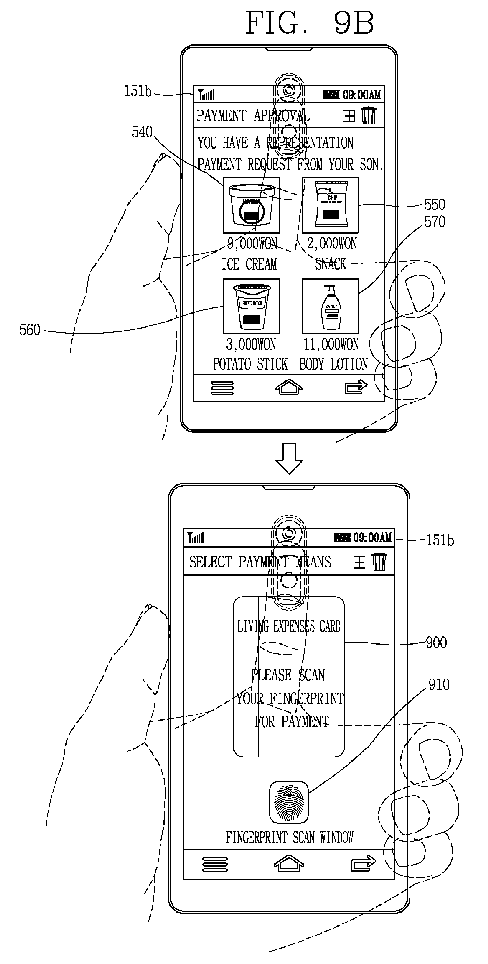

As another example, referring to the first and second drawings of FIG. 9B, while the payment request information is output on the display unit 151b, the controller 180b may output the card-shaped graphic object 900 on the display unit 151b, in response to an input applied to the user input unit provided on the rear surface of the main body of the payment approval terminal.

The screen information for the payment approval may further include screen information for receiving security information related to the payment security upon performing the payment. The security information may be user's biometric data, such as a fingerprint, a heart rate, an iris, a face recognition, a pulse, a pattern, a sign, a password, all regarding the user, or user-preset information. For example, as illustrated in the second drawings of FIGS. 9A and 9B, the screen information 900 related to the payment approval information and screen information 910 for receiving the security information may further be output on the display unit 151 b.

When the security information is received, the controller 180b may decide whether or not to generate the payment approval information according to whether or not the security information matches pre-stored security information. For example, when the fingerprint information is received, the controller 180b may determine whether or not the received fingerprint information matches pre-stored fingerprint information. When the received fingerprint information matches the pre-stored fingerprint information according to the determination result, the controller 180b may generate the payment approval information. Also, the controller 180b may transmit the generated payment approval information to the payment request terminal.

On the other hand, when the received fingerprint information does not match the pre-stored fingerprint information according to the determination result, the controller 180b may not generate the payment approval information.

Unlike this, the controller 180b may generate the payment approval information, regardless of the match or non-match between the received security information and the pre-stored security information. Here, the controller 180b may decide whether or not to transmit the payment approval information to the payment request terminal according to whether or not the payment security information matches the pre-stored security information.

In more detail, when the received security information matches the pre-stored security information, the controller 180b may transmit the payment approval information to the payment request terminal. When the received security information does not match the pre-stored security information, the controller 180b may not transmit the payment approval information to the payment request terminal. Here, the payment request terminal may perform the payment according to whether or not the payment approval information has been received.

The controller 180b may also output the screen information for the payment approval in a different manner on the basis of status information related to the payment approval. The payment approval-related status information may include a first state which is a state before an input of security information, a second state which is a state that the security information has successfully been input, a third state which is a state that wrong security information has been input, and a fourth state which is a state that the payment has been approved. The second state indicating the successful input of the security information may be a state in which the payment approval is allowable as the user-input security information matches the pre-stored security information, and the third state indicating the input of the wrong security information may be a state in which the payment approval is not allowable because the user-input security information does not match the pre-stored security information.

In more detail, as illustrated in the second drawing of FIG. 9A, the controller 180b may output notification information on the display unit 151b to notify that the security information should be input on the payment approval-related screen information, when the status information related to the payment approval is in the first state which is the state before the input of the security information. The notification information may be text information, or a card-shaped graphic object indicating the non-allowable payment. For example, the card-shaped graphic object indicating the unallowable payment may be a graphic object on which card information is limitedly output, or a card-shaped graphic object with a hatching pattern.

Also, as illustrated in the third drawing of FIG. 9A, when the status information related to the payment approval is in the second state which is the state indicating the successful input of the security information, the controller 180b may output a card-shaped graphic object 900, which indicates that the payment approval is allowable by the successful input of the security information, on the display unit 151b. For example, the card-shaped graphic object 900 indicating the allowable state of the payment approval may be a graphic object on which the card information is fully output, or a graphic object indicating that the security information has been input.

Although not illustrated, when the status information related to the payment approval is in the second state which is the state indicating the input of the wrong security information, the controller 180b may output a card-shaped graphic object, which includes notification information notifying the input of the wrong security information, on the display unit 151 b.

As illustrated in the third drawing of FIG. 3B, when the status information related to the payment approval is in the second state which is the payment-approved state, the controller 180b may change the card-shaped graphic object into payment completion information 360, and output the changed payment completion information 360 on the display unit 151 b.

Meanwhile, the foregoing description has been given of the case where the card-shaped graphic object is changed according to the status information related to the payment approval in the payment approval terminal, but the method may also equally be applied to the payment request terminal.

Also, when the payment means is provided in plurality, the controller 180b may select at least one of the plurality of payment means.

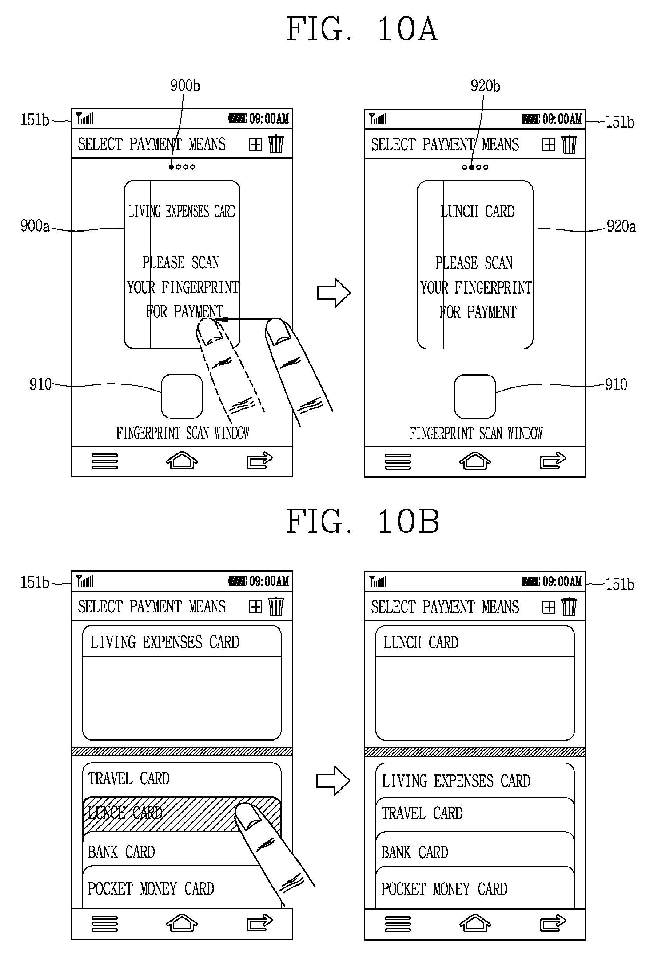

For example, as illustrated in the first drawing of FIG. 10A, the controller 180b may output a first payment means 900a on the display unit 151 b. Here, as illustrated in the second drawing of FIG. 10A, the controller 180b may output a second payment means 920a, which is different from the first payment means 900a, on the basis of a drag input applied in a preset direction. Here, graphic objects 900b and 920b indicating a plurality of payment means may further be output on one portion of the display unit 151 a.

The graphic objects 900b and 920b indicating the plurality of payment means may be output in different states, in interoperation with a payment means currently output on the display unit 151b. For example, as illustrated in the first drawing of FIG. 10A, when the first payment means 900a is output, the first graphic object 900b interoperable with the first payment means 900a may change in color. As another example, as illustrated in the second drawing of FIG. 10A, when the first payment means 900a output on the display unit 151b changes into the second payment means 920a, the color of the first graphic object 900b changes again, and the color of the second graphic object 920b interoperable with the second payment means 920a may change.

The controller 180b may also output a payment means list including items indicating the plurality of payment means. For example, as illustrated in the first drawing of FIG. 10B, the display unit 151b may include a first portion outputting one card which is set to a current payment means, and a second portion outputting a payment means list including items indicating a plurality of cards.

Here, in a state that one card has been selected, the controller 180b may change the payment means from the one card into another card, in response to a touch applied to the another card of the plurality of cards included in the payment means list. For example, as illustrated in the first drawing of FIG. 10B, in a state that "living expenses card" has been selected, when a touch is applied to "lunch card," the controller 180b may set the "lunch card" to the payment means in response to the touch.

Here, as illustrated in the second drawing of FIG. 10B, the "lunch card" may be output on the first portion of the display unit 151b and the "living expenses card" may be output on a part of the second portion.

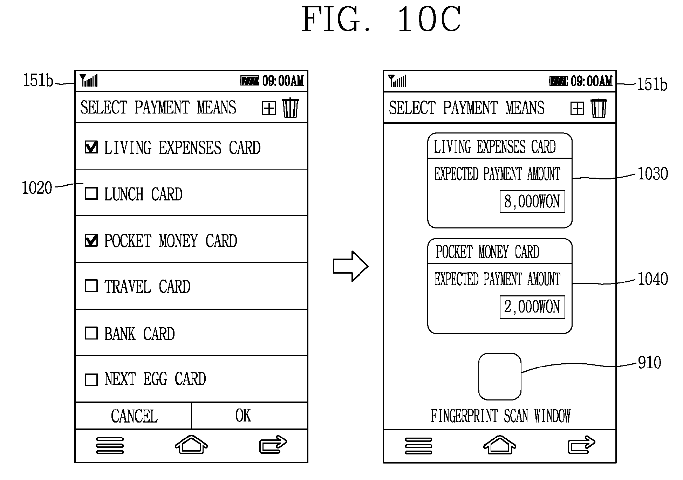

Also, the controller 180b may simultaneously select at least two of the plurality of payment means. In this instance, the controller 180b may perform the payment for at least part of a total payment amount included in the payment request information by a first payment means, and for the remaining part of the total payment amount by a second payment means. For example, as illustrated in the first drawing of FIG. 10C, the controller 180b may set both "living expenses card" and "lunch card" to the payment means. Also, as illustrated in the second drawing of FIG. 10C, the controller 180b may set "8000 won" to be paid by the "living expenses card" 1030 and "2000 won" to be paid by "pocket money card" 1040. Accordingly, the payment can be performed by separately setting a payment amount limit for each card. Also, at least two cards can be simultaneously used for payment, thereby providing a method of variously performing payment.

The foregoing description has been given of the method of generating the payment approval information. This may allow a terminal located at a remote place to perform representation payment.

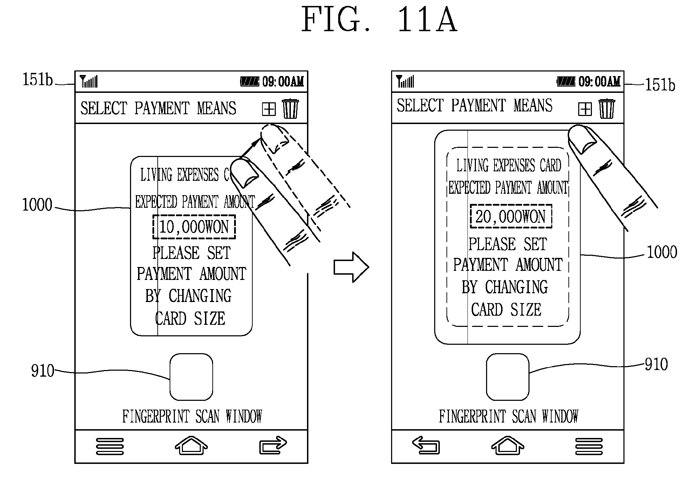

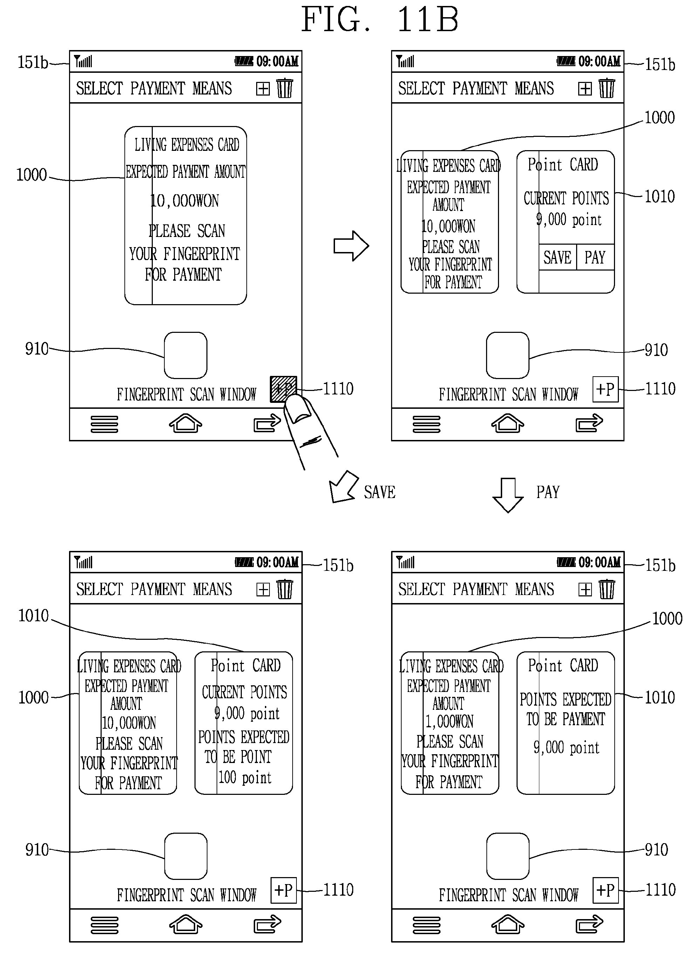

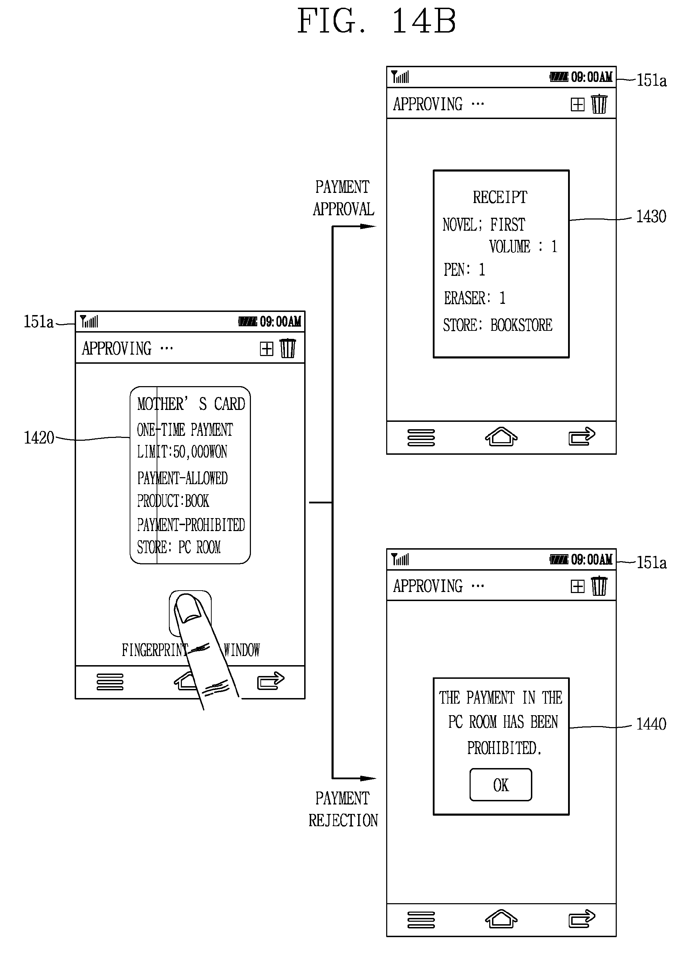

Hereinafter, a method of generating payment card information will be described. FIGS. 11A and 11B are conceptual views illustrating a method of setting a payment amount of payment card information. FIGS. 14A and 14B are conceptual views illustrating a method of generating payment card information in a payment approval terminal.

The payment approval terminal may transmit payment card information when a preset condition is met or in response to a user request.

The preset condition may correspond to a case of receiving the payment request information, a condition that a control command has not been transmitted from a user for a preset time after reception of the payment request information, and a condition that the payment request information matches pre-stored information. For example, when the control command associated with the payment has not been received for the preset time after the reception of the payment request information, the controller 180b may transmit the payment card information. As another example, when the payment card information includes specific store information, the controller 180b may transmit the payment card information in an automatic manner.

Also, when the payment card information is transmitted in advance without the reception of the payment request information or transmitted based on the satisfaction of the preset condition, the controller 180b may preset the payment card information before the reception of the payment request information. That is, the controller 180b may preset the payment card information such that the payment request terminal can perform the payment, even without the user's separate control command.

The controller 180b may provide a user interface for setting the payment card information on the display unit 151b. For example, as illustrated in the first drawing of FIG. 14B, the controller 180b may provide on the display unit 151b screen information for setting payment requester information, payment amount information, payment-allowed product information, payment-prohibited store information, security information, extra amount information and the like.

The payment requester information may be identification information relating to the payment request terminal which is to receive the payment card information. The payment requester information may be contact information, phone number information and the like. The payment amount information may refer to the limit of a payment amount of the payment request terminal. The payment-allowed product information may be information relating to a product payment for which is allowed. The payment-prohibited store information may be store information which rejects the payment even if the payment is attempted. The extra amount information may be information relating to an amount of money saved in the payment request terminal after performing the payment, so as to be used for payment later.

Also, the security information may be biometric data (e.g., fingerprint information, iris information, heart rate information, face recognition information and the like) of the user having the payment request terminal, password information, pin code information, pattern information, signature information and the like, all required for payment. For example, as illustrated in the second drawing of FIG. 14A, the controller 180b may output a finger scan window 1410 for registering fingerprint information relating to the payment request terminal in advance. This may result in more reinforcing security upon performing payment.

Meanwhile, the payment amount information may include maximum payment amount information and minimum payment amount information. Here, the controller 180 may set at least one of the maximum payment amount information and the minimum payment amount information according to a user request.

When setting the maximum payment amount information and the minimum payment amount information, the controller 180b may allow the user to input the maximum payment amount and the minimum payment amount. In this instance, the payment request terminal which has received the payment approval information may perform the payment between the maximum payment amount and the minimum payment amount. If attempting to perform payment which exceeds the maximum payment amount, the approval for the payment may be rejected, and notification information indicating the rejected payment approval may be transmitted to the payment approval terminal.

The controller 180b may provide various user interfaces for setting the payment amount.

For example, as illustrated in the first drawing of FIG. 11A, the controller 180b may set a payment amount by changing a size of a card-shaped graphic object 1000. Here, the size of the card-shaped graphic object 1000 may change in response to a touch applied to a boundary of the card-shaped graphic object 1000. For example, when the card-shaped graphic object 1000 is reduced in size in response to a drag input applied thereto, the controller 180b may set the payment amount to be smaller than a currently-set payment amount. On the other hand, when the card-shaped graphic object 1000 increases in size, the controller 180b may set the payment amount to increase more than the currently-set payment amount.

For example, as illustrated in the second drawing of FIG. 11A, when the card-shaped graphic object 1000 increases in size, the controller 180b may set the payment amount to "20000 won" which increases more than a currently-set payment amount of "10000 won."

Also, the controller 180b may additionally provide a point card associated with the payment store using information relating to the payment store included in the payment request information. The point card may be a card in which a predetermined percentage of money paid for at the payment store is saved. The point card may include a function of paying for products sold at the payment store using the saved points.

As illustrated in the first drawing of FIG. 11B, when the presence of the point card associated with the payment store is recognized, the controller 180b may output a graphic object 1110 associated with the point card for the payment store on the display unit 151b. Here, the controller 180b may not output the graphic object 1110 associated with the point card when the absence of the point card is recognized.

On the other hand, the controller 180b may output the graphic object 1110 associated with the point card, irrespective of the presence or absence of the point card for the payment store. When a touch is applied to the graphic object 1110 associated with the point card, the controller 180b may output the point card on the display unit 151b when the point card is present and may not output the point card when the point card is not present, on the basis of the payment store information.

As illustrated in the second drawing of FIG. 11B, when a touch is applied to the graphic object 1110 associated with the point card, the controller 180b may output a graphic object 1010 in the shape of the point card on the display unit 151 b. The graphic object 1010 in the shape of the point card may further include graphic objects indicating a point save function and a point pay function.

When the point card is selected, the controller 180b may add the point card information to the payment card information and transmit the payment card information to the payment request terminal.

When the point save function is selected, the controller 180b may generate the payment card information such that points can be saved up upon payment performed in the payment request terminal, and thus transmit the generated payment card information to the payment request terminal. In this instance, as illustrated in the fourth drawing of FIG. 11 B, the graphic object 1010 in the shape of the point card may further include points expected to be saved up.

On the other hand, when the point pay function is selected, the controller 180b may generate the payment card information such that the payment can be performed using the points, and transmit the generated payment card information to the payment request terminal. In this case, as illustrated in the third drawing of FIG. 11B, the graphic object 1010 in the shape of the point card may include information relating to points expected to be used for the payment.

The foregoing description has been given of the method of generating the payment card information in the payment approval terminal. Also, upon performing the payment of the payment request terminal, various conditions for performing payment can be preset.

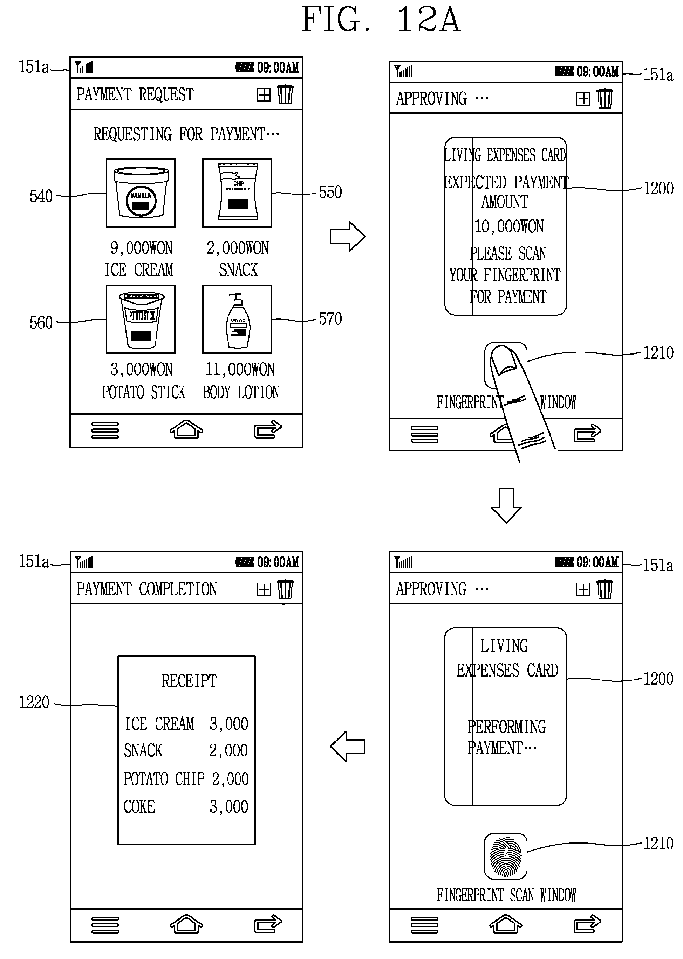

Hereinafter, description will be given of a method in which a payment request terminal which has transmitted payment request information performs payment based on payment approval information and payment card information received from a payment approval terminal. FIGS. 12A to 12D are conceptual views illustrating a method in which a payment request terminal which has transmitted payment request information performs payment on the basis of payment approval information received from a payment approval terminal.

The payment request terminal may transmit payment request information to the payment approval terminal and receive at least one of payment approval information and payment card information, in response to the payment request information. The controller 180a of the payment request terminal may perform payment on the basis of the at least one of the payment approval information and the payment card information received from the payment approval terminal.

In more detail, the controller 180a may transmit a wireless signal including at least one of the payment approval information and the payment card information to an external object (e.g., POS), which is associated with the payment and located at an adjacent region, according to a preset payment method, on the basis of the at least one of the payment approval information and the payment card information. The preset payment method may be at least one of an NFC payment method and an MST payment method.

The controller 180a may transmit the wireless signal to the external object associated with the payment without separate security information, or transmit the wireless signal to the external object associated with the payment only when security information is received from a user.

The security information may be biometric data (e.g., fingerprint information, iris information, heart rate information, pulse information, face recognition information, etc.) for the user having the payment request terminal, or password information (or pin code information), pattern information, signature information and the like.

When the wireless signal is transmitted only in case of receiving the security information, the controller 180a may determine whether or not the received security information matches security information included in at least one of the payment approval information and the payment card information. Here, the at least one of the payment approval information and the payment card information may further include security information for restricting the payment request terminal from using the payment approval information.

For example, as illustrated in the second drawing of FIG. 12A, when payment card information 1200 is received from the payment approval terminal, the controller 180a may output both of payment card information 1200 and a security information input window 1210 on the display unit 151 a. Here, when the security information is input through the security information input window 1210, the controller 180a may determine whether or not the input security information matches security information included in the payment card information.

When the input security information matches the security information included in the payment card information, the controller 180a may transmit a wireless signal including the payment card information to the external object (e.g., POS) associated with the payment.

On the other hand, when the input security information does not match the security information included in the payment card information, the controller 180a may not transmit a wireless signal including the payment approval information to the external object (e.g., POS) associated with the payment. Also, when the input security information does not match the security information included in the payment card information, the controller 180a may transmit notification information to the payment approval terminal to notify the non-match of the security information.

Meanwhile, when a wireless signal including at least one of the payment approval information and the payment card information is received, the external object associated with the payment may perform payment based on the wireless signal including the payment approval information.

The external object associated with the payment may transmit feedback information relating to the payment approval to at least one of the payment request terminal, which has transmitted the wireless signal including the at least one of the payment approval information and the payment card information, and the payment approval terminal. Here, the at least one of the payment approval information and the payment card information may further include identification information relating to the payment approval terminal. The feedback information may include information indicating whether or not the payment has been approved, on the basis of the wireless signal including the at least one of the payment approval information and the payment card information.

When the information indicating the payment approval is included in the feedback information, the controller 180a may output payment completion information indicating a successful completion of the payment on the display unit 151 a. For example, as illustrated in the fourth drawing of FIG. 12A, the controller 180a may output receipt information 1220 including a payment product and payment amount information for the payment product.

When the information indicating a payment rejection is included in the feedback information, the controller 180a may transmit a wireless signal including at least one of the payment approval information and the payment card information to the external object associated with the payment. Or, the controller 180a may stop the transmission of the wireless signal including the at least one of the payment approval information and the payment card information to the external object associated with the payment, to attempt the payment no more.

When the payment is completed, the controller 180a may delete the at least one of the payment approval information and the payment card information from the memory 170.

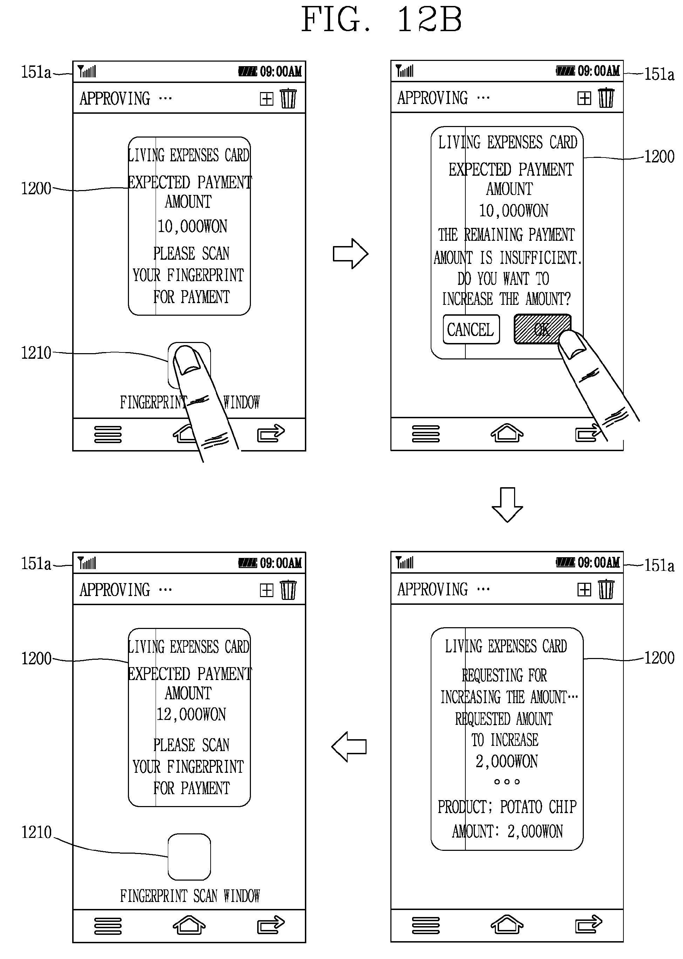

The controller 180a may request the payment approval terminal to increase the payment amount included in at least one of the payment approval information and the payment card information, while performing the payment. In more detail, while performing payment based on at least one of the payment approval information and the payment card information, the controller 180a may transmit amount increase request information for increasing the payment amount to the payment approval terminal. The amount increase request information may include product information and amount information. For example, as illustrated in the first and second drawings of FIG. 12B, upon the shortage of the payment amount during the payment, the controller 180a may output a card-shaped graphic object 1200 to transmit the amount increase request information to the payment approval terminal. Here, the user may transmit the amount increase request information to the payment approval terminal using the cad-shaped graphic object 1200, which has been output to transmit the amount increase request information.

When the amount increase request information is transmitted, as illustrated in the third drawing of FIG. 12B, the controller 180a may output the card-shaped graphic object 1200 to include therein information related to the amount increase request.

Here, the controller 180b of the payment approval terminal which has received the amount increase request information may generate amount increase approval information in the same manner as generating the payment approval information, as aforementioned, and then transmit the generated amount increase approval information to the payment request terminal.

When the amount increase approval information is received, the controller 180a of the payment request terminal may perform payment based on the amount increase approval information. Here, as illustrated in the fourth drawing of FIG. 12B, the controller 180a may output the card-shaped graphic object 1200 including the amount increase approval information.

Also, the controller 180a may decide whether or not to store extra amount information in the memory 170 after performing the payment. The extra amount information may be an amount of money left after the payment or amount information separately set by the payment approval terminal.

In more detail, when the extra amount information is included in at least one of the payment approval information and the payment card information, the controller 180a may store the extra amount information in the memory 170 for later payment, or transmit the remaining extra amount information to the payment approval terminal such that the payment cannot be performed any more on the basis of the extra amount information.

Here, the controller 180a may decide a method of processing the extra amount information based on the payment approval information or the payment card information or based on a user request.

When the method of processing the extra amount information is decided based on the payment approval information or the payment card information, the payment approval terminal may further include information related to the method of processing the extra amount information in advance in the payment approval information or the payment card information.

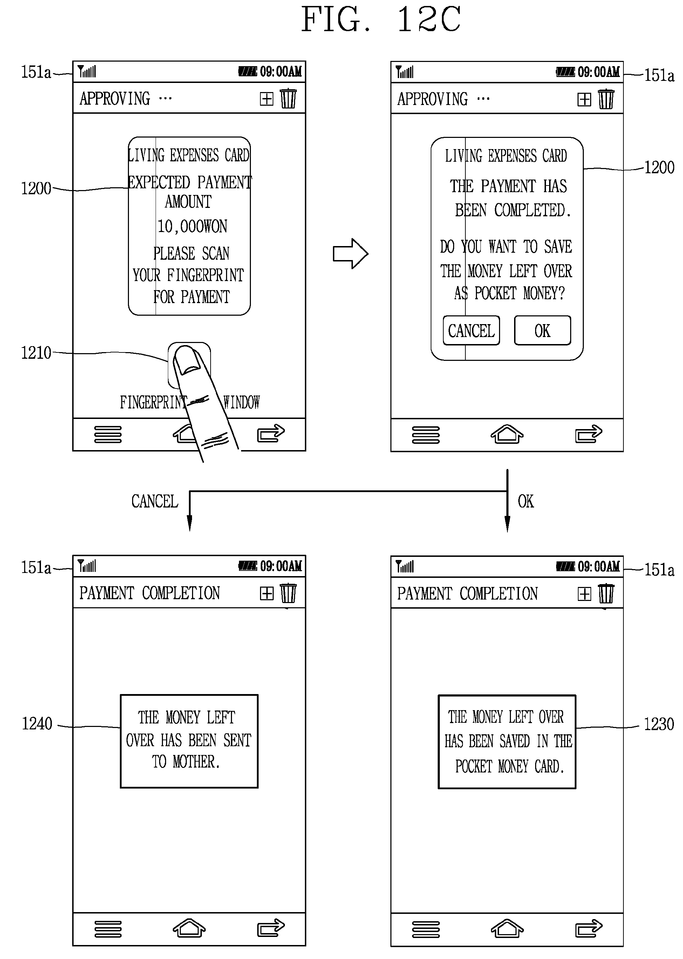

When processing the extra amount information based on the user request, as illustrated in the second drawing of FIG. 12C, the controller 180a may output a popup window which asks (checking) the method of processing the extra amount information on the display unit 151 a, after performing the payment.

After the user selects a function of storing the extra amount information in the memory 170, the controller 180a may process the extra amount information by associating the extra amount information with a specific card. The specific card may be newly-generated information or pre-stored information. Here, as illustrated in the third drawings in FIG. 12C, after processing information related to a remaining amount by associating with a pocket money card, the controller 180a may output notification information notifying the processing result on the display unit 151 a.

In this instance, the user of the payment request terminal may perform payment later on the basis of the payment approval information associated with the extra amount information.

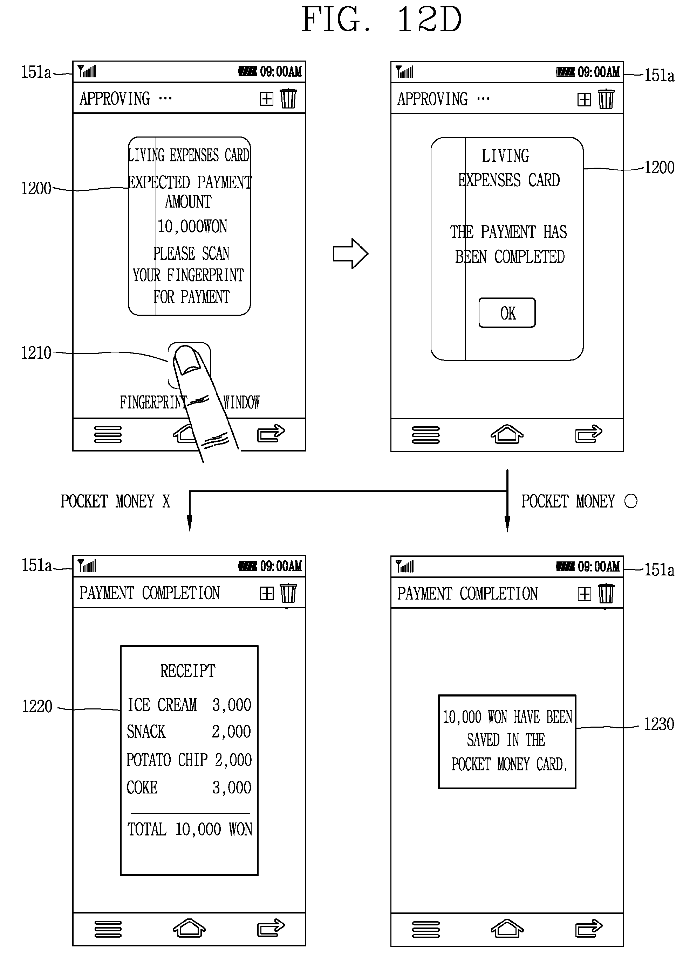

When the extra amount information is transmitted to the payment approval terminal, the controller 180a may transmit the extra amount information, and then delete the extra amount information from the memory 170 such that the payment cannot be performed any more. Here, as illustrated in the fourth drawings of FIGS. 12C and 12D, the controller 180a may output notification information 1240 on the display unit 151a to notify that the extra amount information has been transmitted to the payment approval terminal (e.g., "Mother" terminal). The payment request terminal cannot perform the payment later any more based on the extra amount information once the extra amount information is deleted.

This may allow for providing various functions associated with performing payment. The foregoing description has been given of the method of processing the function associated with performing the payment in the payment request terminal.

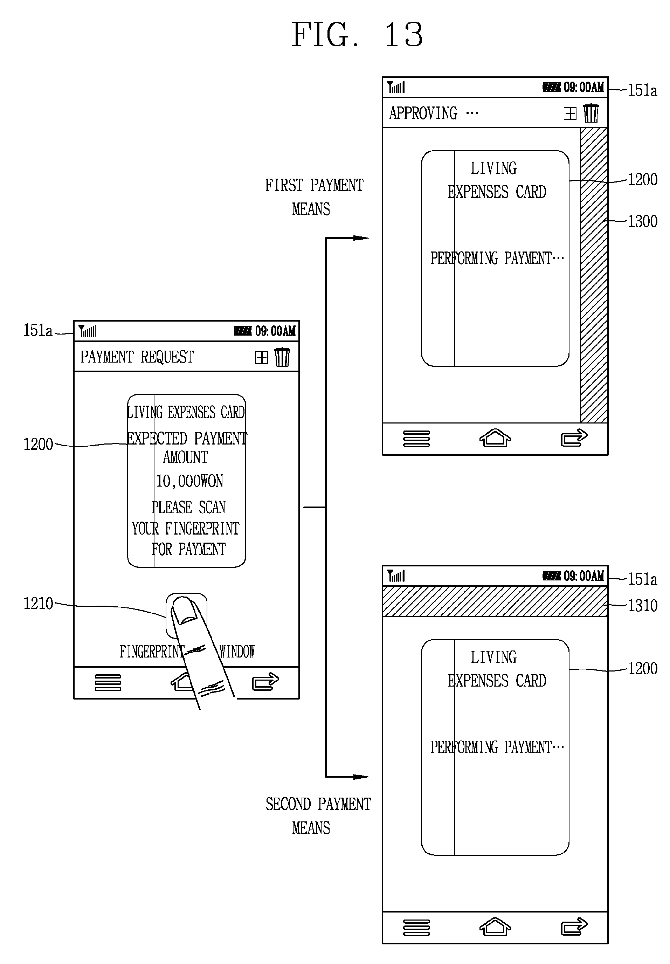

Hereinafter, description will be given of a method of providing notification information related to a payment method in a payment request terminal. FIG. 13 is a conceptual view illustrating a method in which a payment request terminal provides notification information related to a payment method upon performing payment.

The payment request terminal may provide a plurality of payment methods. For example, the payment request terminal may support both of the NFC payment method and the MST payment method.

Meanwhile, the user of the payment request terminal may move a main body of the payment request terminal close to an external object associated with the payment, by transmitting a wireless signal including at least one of the payment approval information and the payment card information to the external object associated with the payment.

When the main body of the payment request terminal is moved close to the external object associated with the payment, the user can transmit the wireless signal including the at least one of the payment approval information and the payment card information to the payment-associated external object only by allowing a specific portion of the main body of the payment request terminal to be close to the payment-associated external object.

The specific portion of the main body may be a portion where a payment module which can generate and transmit the wireless signal and can perform short-range communication is located. The payment module may be at least one of an NFC module (or a first payment method) and an MST module (or a second payment method). The NFC module is a module of generating and transmitting a NFC-compliant signal and the MST module is a module of generating and transmitting a magnetic signal. Also, referring to the aforementioned, the NFC module may be a module which can support the NFC payment method, and the MST module may be a module which can support the MST payment method.

The NFC module and the MST module may be arranged on the same portion or different portions.

During payment based on the payment approval information, the controller 180a may output an indicator on a portion corresponding to a portion where the payment module is arranged, of an output region of the display unit 151 a. The indicator may be a graphic object which indicates a portion at which the user has to approach the main body with the payment-associated external object. The indicator may have a different visual appearance (e.g., color, shape, output position, etc.) according to a payment module.

When the NFC module and the MST module are arranged on different portions, the controller 180a may output the indicator on a different portion according to a type of the payment module. For example, as illustrated in the right top drawing of FIG. 13, when the payment is performed by a first payment means, the controller 180a may output an indicator 1300 on a first portion corresponding to the portion on which the first payment means is located. As another example, as illustrated in the right bottom drawing of FIG. 13, when the payment is performed by a second payment means, the controller 180a may output an indicator 1310 on a second portion corresponding to a portion on which the second payment means is located. Accordingly, the user may intuitively recognize the portion to which the mobile terminal is to be moved close, in order to perform the payment.

Meanwhile, although not illustrated, when the NFC module and the MST module are arranged on the same portion, the controller 180a may output the indicators on the same portion. In this instance, the controller 180a may set a different color or shape for each indicator according to the NFC module and the MST module.

The foregoing description has been given of the method of outputting the different indicator according to the payment means or method.

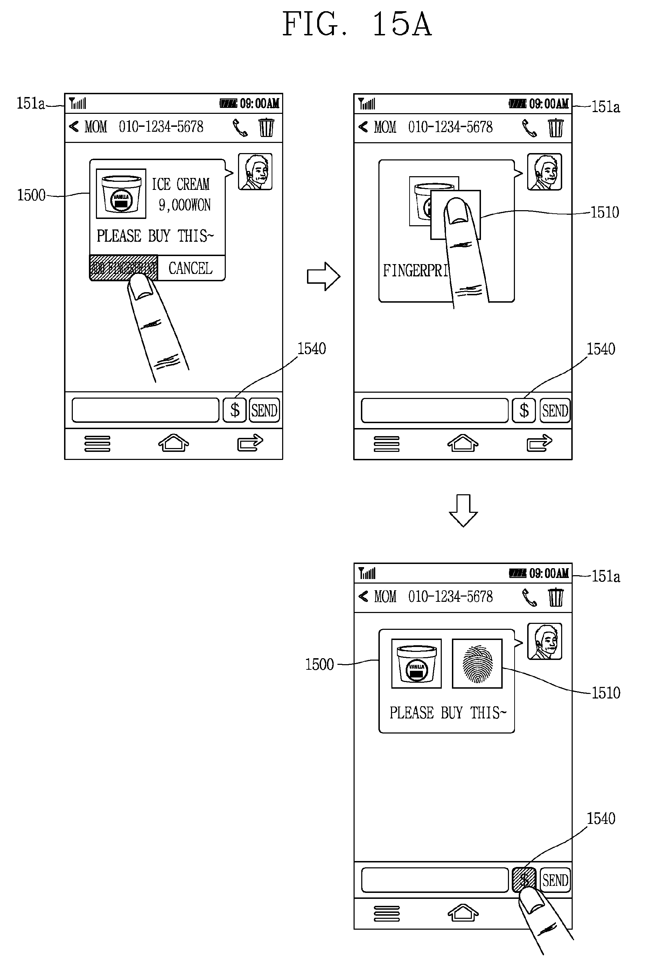

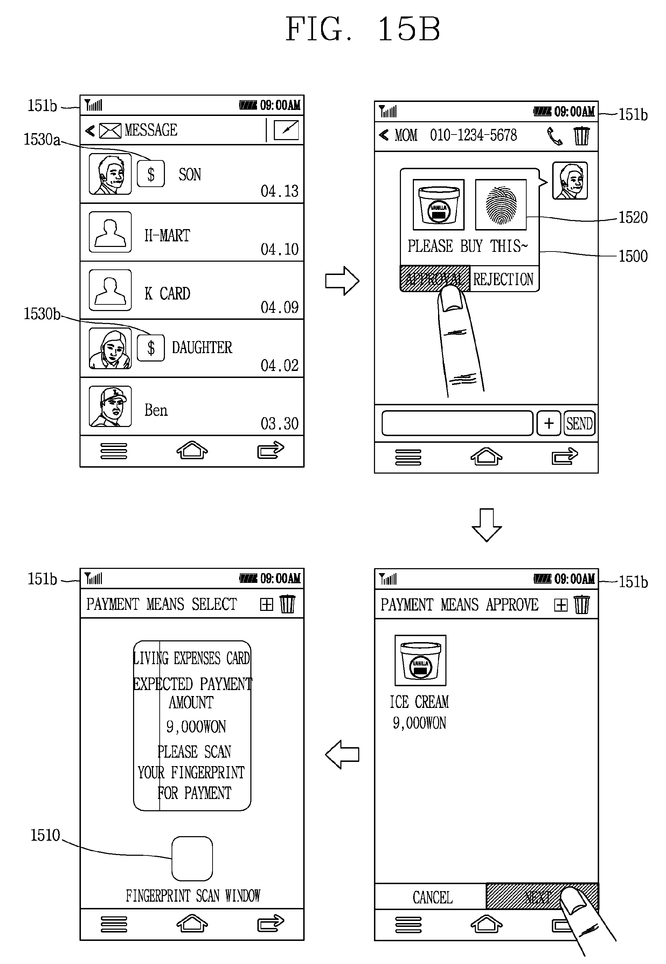

Hereinafter, description will be given of a method of transmitting in real time at least one of payment request information, payment approval information and payment card information using an application associated with a message transmission function. FIGS. 15A and 15B are conceptual views illustrating a method of transmitting in real time payment request information, payment approval information and payment card information, using an application associated with a message transmission function.

The controller 180a of the payment request terminal may transmit payment request information using an application associated with a message transmission function. Here, the application associated with the message transmission function may further include a transmission function of the payment request information. Or, the controller 180a may execute the transmission function of the payment request information in association with the message transmission function.

In this instance, the payment approval terminal which has received the payment request information may be set to a counterpart terminal which receives a message transmitted by the message transmission function. For example, as illustrated in the first drawing of FIG. 15A, the payment approval terminal receiving the payment request information may be "Mother" terminal which receives a message.

When the application associated with the message transmission function includes the transmission function of the payment request information, the controller 180a may further include a graphic object associated with the payment request information on an execution screen of the message transmission function. For example, as illustrated in the first drawing of FIG. 15A, the execution screen of the message transmission function may further include a graphic object 1540 associated with the payment request information.

The generation and transmission of the payment request information 1510 on the application associated with the message transmission function will be understood by referring to the description of FIG. 4.

Meanwhile, the controller 180a may add biometric data of the user having the payment request terminal onto the payment request information. Accordingly, the controller 180a may more reinforce security when the payment approval terminal approves the payment.

For example, as illustrated in the second drawing of FIG. 15A, the user of the payment request terminal may add fingerprint information 1510 to the payment request information 1500. In this instance, as illustrated in the third drawing of FIG. 15A, the controller 180a may transmit the payment request information 1500 to the payment approval terminal by including the fingerprint information 1510 therein. This may result in more reinforcing security upon requesting and performing representation payment.

Meanwhile, the payment approval terminal which has received the payment request information through a message may output the message including the payment request information and a message without including the payment request information in a discriminating manner. For example, as illustrated in the first drawing of FIG. 15B, the controller 180b may output graphic objects 1530a and 1530b, which indicate that the payment request information has been included, on one portion of each region, on which a message item including the payment request information is output, in a message list including a plurality of message items received from at least one external terminal. Also, the controller 180b may not output a graphic object indicating the inclusion of the payment request information on an output region of the message item without including the payment request information. This may allow the user to recognize the inclusion or exclusion of the payment request information even without viewing details of a message.

Also, upon receiving the payment request information through the application associated with the message transmission function, the controller 180b of the payment approval terminal may transmit at least one of the payment approval information and the payment card information through the application associated with the message transmission function.

In more detail, upon the execution of the application associated with the message transmission function, details of messages transmitted and received with a counterpart terminal may be output on the display unit 151 b. Here, when there is a message including the payment request information in those transmitted and received messages, the controller 180b may transmit at least one of the payment approval information and the payment card information to the counterpart terminal (i.e., payment request terminal) which has transmitted the payment request information, in response to a user request. The user request may be received in various manners, such as a touch input, a voice input, a gesture input and the like.

For example, as illustrated in the second drawing of FIG. 15B, the controller 180b may execute a function for transmitting at least one of the payment approval information and the payment card information, in response to a touch applied to a graphic object associated with a transmission function of at least one of the payment approval information and the payment card information. As another example, although not illustrated, in a state that details of messages transmitted and received with the counterpart terminal are output on the display unit 151b, the controller 180b may execute a function of transmitting at least one of the payment approval information and the payment card information, in response to a drag input applied to the display unit 151b in a preset direction.

In this instance, as illustrated in the third and fourth drawings of FIG. 15B, the controller 180b may transmit the at least one of the payment approval information and the payment card information to the counterpart terminal with which the messages have been transmitted and received. Here, the at least one of the payment approval information and the payment card information may be generated by the same method as the aforementioned.

The foregoing description has been given of the method of performing the payment through the application associated with the message transmission function.

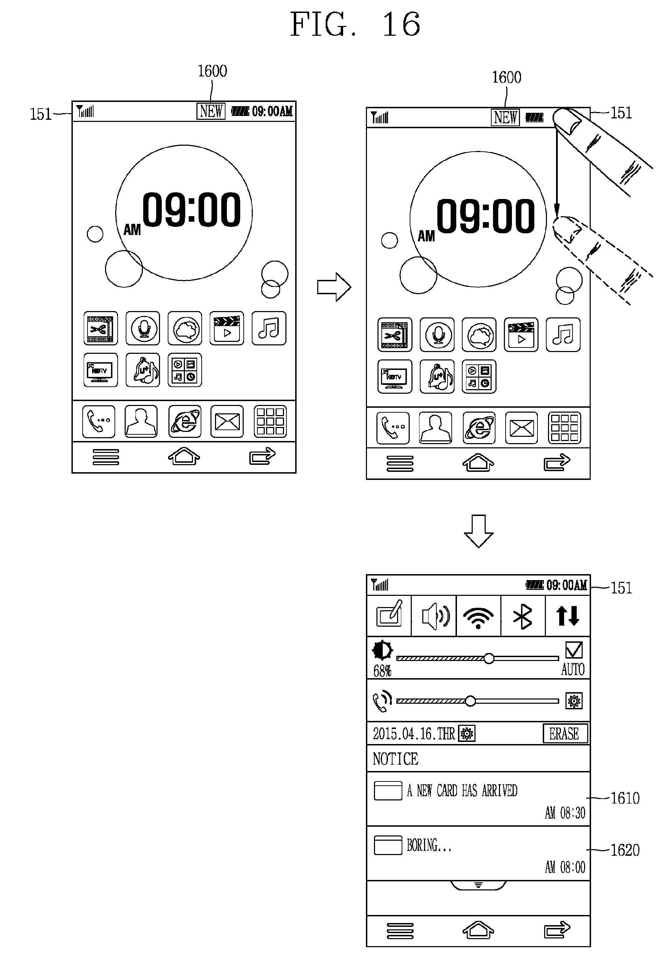

Hereinafter, description will be given of a method of notifying a generation of a payment-related event to a user. FIG. 16 is a conceptual view illustrating a method of notifying an event associated with payment when such event is generated.

The controller 180 of the mobile terminal may output notification information when a payment-related event is generated.

The payment-related event may include various events associated with the payment, such as an event of receiving a feedback signal from a payment-associated external object, an event that the payment request terminal receives at least one of the payment approval information and the payment card information from the payment approval terminal, an event that the payment approval terminal receives the payment request information from the payment request terminal, an event that the payment approval terminal receives amount increase request information from the payment request terminal, an event that the payment approval terminal receives payment completion information from the payment request terminal, and the like.

The notification information may be output on a state output region for outputting information related to a state of the mobile terminal.

The state output region may be one region of an output region of the display unit 151, namely, a region for outputting a battery level, a current time, a communication state and the like of the mobile terminal. Here, when the payment-related event is generated on the state output region, notification information notifying the generation of the payment-related event may be output on the state output region. For example, as illustrated in the first drawing of FIG. 16, the controller 180b may output notification information 1600 notifying the generation of the payment-related event on the state output region.

The state output region may also be a region fixed onto the display unit 151. For example, the state output region may be an upper region based on a front surface of the display unit 151.

The other region of the display unit 151 except for the state output region may be a home screen page (region). The home screen page region may be a region for outputting icons indicating applications installed in the mobile terminal, a widget and the like.

Meanwhile, as illustrated in the second drawing of FIG. 16, when a drag input dragged toward the home screen page region is applied, starting from the state output region, the controller 180 may output a state output window including information related to such state. The state output window may be output in the form of overlapping a part of the home screen page.

The controller 180 may output the state output window on one region of the home screen page to have a size corresponding to a length of the drag input. Here, on the other region of the home screen page without outputting the state output window may be output a home screen page including icons indicating applications installed in the mobile terminal or a widget, or an execution screen of an application installed in the mobile terminal.

Also, when the drag input is applied by a preset length or more, the controller 180 may output the state output window, instead of the home screen page, on the display unit 151.

When the payment-related event is generated on the state output window, the controller 180b may output contents (details) of the payment-related event. For example, as illustrated in the third drawing of FIG. 16, the controller 180 may output the contents of the payment-related event, such as "A new card has arrived" and "The payment has completed," on the state output window.

That is, the controller 180 may output notification information on the state output region to notify the generation of the payment-related event, and output the content of the payment-related event on the state output window.

An output order of the contents of the payment-related event may be set on the basis of at least one of an event generation time and an event type. For example, as illustrated in the third drawing of FIG. 16, when the event "A new card has arrived" has generated more recently than the event "The payment has completed" based on a current time, the controller 180 may output the contents of the events in the order of events generated recently.

Although not illustrated, when a touch is applied to the contents of the payment-related event output on the state output window, the controller 180 may execute a function associated with the payment-related event.

Meanwhile, when the payment-related event is generated, the controller 180 may output notification information on the home screen page region, other than the state output region. For example, the controller 180 may output notification information on one portion of the home screen page region to notify the generation of the payment-related event. Even in this instance, the controller 180 may perform the same control as the state output window.

So far, the method of outputting the notification information upon generation of the payment-related event has been described.

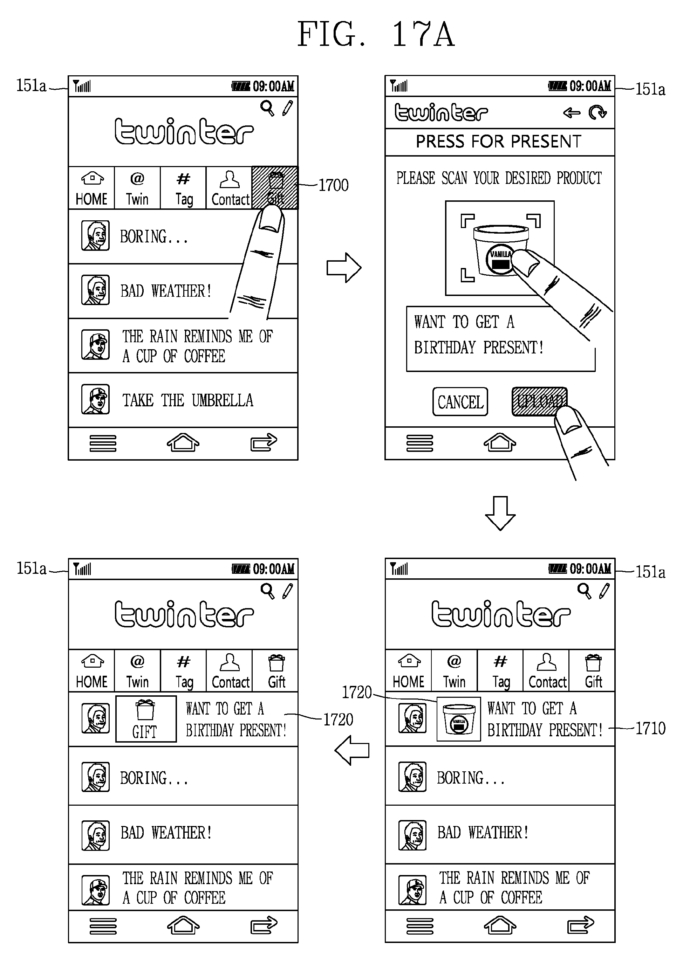

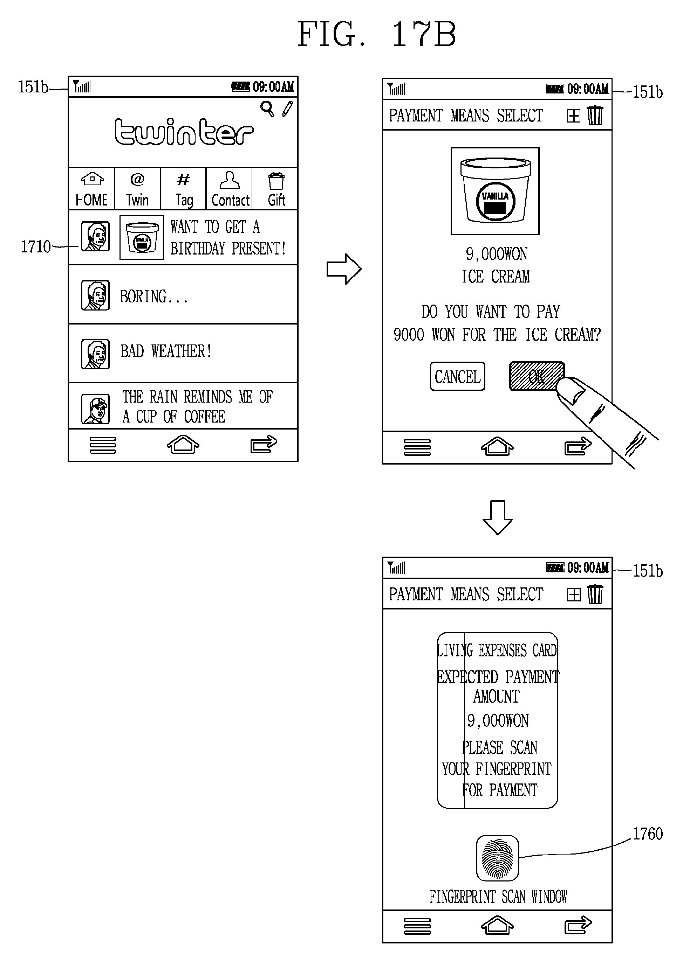

Hereinafter, a method of performing representation payment using an SNS application will be described. FIGS. 17A and 17B are conceptual views illustrating a method of performing representation payment using an SNS application.

The payment request terminal may transmit the payment request information directly to the payment approval terminal, or transmit the payment request information to unspecified persons using a social network service (SNS) application.

The SNS application is an application providing a function that a plurality of users transmit information to an external server (e.g., a Facebook server) and share the transmitted information with other users. For example, when one user uploads information on the Facebook server, other users who have authority for accessing the information uploaded by the one user may access the Facebook server so as to view the information uploaded by the one user.

When the payment request information is transmitted using the SNS application, the controller 180a of the payment request terminal may upload the payment request information on the SNS server. For example, as illustrated in the first drawing of FIG. 17A, a graphic object 1700 indicating an upload function of the payment request information may be included in the execution screen of the SNS application. Here, the controller 180a may execute the upload function of the payment request information, in response to a touch applied to the graphic object 1700 indicating the upload function of the payment request information. For example, as illustrated in the second drawing of FIG. 17A, the controller 180a may provide screen information for inputting payment request product information and payment amount information on the display unit 151 a.

When the payment request information is input, the controller 180a may upload the payment request information on the SNS server, in response to a user request. In this instance, as illustrated in the third drawing of FIG. 17A, the controller 180a may upload the payment request information 1710 on the SNS server.

Here, the SNS server may receive at least one of the payment approval information and the payment card information from the payment approval terminal, in response to the payment request information. In this instance, as illustrated in the fourth drawing of FIG. 17A, the SNS server may output the payment request information 1710 by changing into payment approval information 1730.

When the payment request information 1710 is changed into the payment approval information 1730, the controller 180a may perform the payment based on at least one of the payment approval information 1730 and the payment card information.

Meanwhile, as illustrated in the first drawing of FIG. 17B, the controller 180b of the payment approval terminal may receive the payment request information by accessing the SNS server. Here, the controller 180b may generate the payment approval information based on the payment request information 1710. For example, as illustrated in the second and third drawings of FIG. 17B, the controller 180b may generate the payment approval information and transmit the generated payment approval information to the SNS server. Here, the generation of the payment approval information may be carried out by the same method as the aforementioned. Here, when the payment approval information is transmitted to the SNS server, the controller 1809b may generate the payment approval information such that the payment can be performed only by the payment request terminal.

So far, the method of performing the payment through the SNS has been described. This may allow for simply transmitting payment request information to unspecified users and receiving payment approval information from at least some of the plurality of unspecified users. Accordingly, each user can request for representation payment from other users, in addition to people whose contact information has been stored in the user's phone book.

The present invention can provide a method of performing representation payment between a payment request terminal and a payment approval terminal, in a mobile terminal supporting various payment methods. Accordingly, the payment request terminal may perform the payment through the payment approval terminal located at a remote place, and also the payment approval terminal may perform the payment through the payment request terminal located at a remote place.

Also, the present invention can provide various functions associated with payment as well as a payment function, by negotiation of products in real time between the payment request terminal and the payment approval terminal.

In addition, the present invention can provide a convenient representation payment method by providing various functions, without being limited to the simple payment for payment request products.

The present invention can be implemented as computer-readable codes in a program-recorded medium. The computer-readable medium may include all types of recording devices each storing data readable by a computer system. Examples of such computer-readable media may include hard disk drive (HDD), solid state disk (SSD), silicon disk drive (SDD), ROM, RAM, CD-ROM, magnetic tape, floppy disk, optical data storage element and the like. Also, the computer-readable medium may also be implemented as a format of carrier wave (e.g., transmission via an Internet). The computer may include the controller 180 of the terminal. Therefore, it should also be understood that the above-described embodiments are not limited by any of the details of the foregoing description, unless otherwise specified, but rather should be construed broadly within its scope as defined in the appended claims, and therefore all changes and modifications that fall within the metes and bounds of the claims, or equivalents of such metes and bounds are therefore intended to be embraced by the appended claims.

## Claims

1. A mobile terminal, comprising:
a display(151);
a wireless communication unit(110);
a controller(180) configured to:
cause to the wireless communication unit(110) to transmit payment request information relating to a specific product to an external terminal;
receive at least one of payment approval information or payment card information approving payment for the specific product after transmitting the payment request information;
cause the display(151) to display the received at least one of the payment approval information or the payment card information;
cause the wireless communication unit(110) to transmit payment for the specific product according to at least one of the payment approval information or the payment card information; and
cause the display(151) to terminate the displaying of the received at least one of the payment approval information or the payment card information after the transmitting of the payment.

2. The mobile terminal of claim 1, wherein the controller(180) is further configured to:
delete the payment approval information to restrict the payment according to the at least one of the payment approval information or the payment card information, when the payment for the specific product is transmitted.

3. The mobile terminal of claim 1 or 2, wherein the wireless communication unit(110) comprises:
a short-range communication unit configured to perform communication with the external terminal located at a close distance relative to the mobile terminal;
wherein the controller(180) is further configured to:
cause the short-range communication unit to transmit the payment to the external terminal.

4. The mobile terminal of any of claims 1 to 3, wherein the payment approval information includes at least one of information related to at least one product, location information, or time information.

5. The mobile terminal of any of claims 1 to 3, wherein the controller(180) is further configured to:
cause the display(151) to display information related to the specific product after the transmitting of the payment request information.

6. The mobile terminal of claim 5, wherein the controller(180) is further configured to:
change visual appearance of the information related to the specific product on the display(151) to indicate that the specific product has been deleted, when notification information is received from the external terminal that indicates that the specific product has been deleted.

7. The mobile terminal of claim 5, wherein the controller(180) is further configured to:
cause the display(151) to display information related to another product when the payment approval information related to the specific product is received from the external terminal, the another product being different from the specific product.

8. The mobile terminal of any of claims 1 to 3, further comprising a first payment module that is configured to perform payment by a first payment method, and a second payment module that is configured to perform payment by a second payment method,
wherein the controller(180) decides an output position of notification information, notifying the at least one of the payment approval information or the payment card information, based on a payment method included in the at least one of the payment approval information or the payment card information.

9. The mobile terminal of any of claims 1 to 3, further comprising:
a camera, wherein the controller(180) is further configured to:
control the camera to capture an image for the specific product in response to a user request; and
generate the payment request information using the captured image.

10. A mobile terminal, of any of claims 1 to 3,
wherein at least one of the payment approval information or the payment card information is set in a manner that the payment is no longer performed in the external terminal once the payment is performed in the external terminal.

11. The mobile terminal of any of claims 1 to 3 or 10, wherein the controller(180) is further configured to:
set the at least one of the payment approval information or the payment card information to be deleted from a memory once the payment is performed in the external terminal.

12. The mobile terminal of any of claims 1 to 3 or 10, wherein the controller(180) is further configured to:
cause the wireless communication unit(110) to transmit payment approval information related to at least one of a plurality of products to the external terminal in response to a user request, when payment request information related to the plurality of products is received from the external terminal.

13. The mobile terminal of any of claims 1 to 3 or 10, further comprising a display, wherein the controller(180) is further configured to:
cause the display(151) to display screen information for setting the at least one of the payment approval information or the payment card information in response to a touch to the display(151) that occurs while the payment request information related to the specific product is displayed on the display.

14. The mobile terminal of any of claims 1 to 3 or 10, wherein the payment request information includes payment store information, and wherein the controller(180) is further configured to:
generate the payment approval information by adding another product different from the specific product to the payment request information based on the payment store information.

15. A method for controlling a mobile terminal, the method comprising:
transmitting payment information related to at least one product to an external terminal;
receiving from the external terminal at least one of payment approval information or payment card information related to one or more products of the at least one product; and
performing payment for the one or more products based on the at least one of the payment approval information or the payment card information related to the one or more products,
wherein the payment approval information or the payment card information is set to restrict payment after the payment for the one or more products are performed.
